# EUROPÄISCHE PATENTSCHRIFT

(11) **EP 2 990 533 B1**
(45) Veröffentlichungstag und Bekanntmachung des Hinweises auf die Patenterteilung: **03.05.2017**
(21) Anmeldenummer: 15180831.8
(22) Anmeldetag: 12.08.2015
(51) Int. Cl.: E01C 23/01

(54) **SELBSTFAHRENDE BAUMASCHINE UND VERFAHREN ZUM STEUERN EINER SELBSTFAHRENDEN BAUMASCHINE**
SELF-PROPELLED CONSTRUCTION MACHINE AND METHOD FOR CONTROLLING THE SAME
ENGIN AUTOMOBILE ET PROCÉDÉ DE COMMANDE D'UN ENGIN AUTOMOBILE

(30) Priorität: 28.08.2014 DE 102014012831
(43) Veröffentlichungstag der Anmeldung: 02.03.2016
(73) Patentinhaber: Wirtgen GmbH, 53578 Windhagen (DE)
(72) Erfinder: Berning, Christian, 53909 Zülpich (DE); Fritz, Matthias, 53545 Linz am Rhein (DE); Barimani, Cyrus, 53639 Königswinter (DE); Hähn, Günter, 53639 Königswinter (DE)
(74) Vertreter: Oppermann, Frank

(56) Entgegenhaltungen:
- DE-A1-102010 048 185

## Beschreibung

Die Erfindung betrifft eine selbstfahrende Baumaschine, insbesondere eine Straßenfräsmaschine oder einen Gleitschalungsfertiger, die über ein Fahrwerk, das in Arbeitsrichtung vordere und hintere Räder oder Laufwerke aufweist, eine Antriebseinrichtung zum Antreiben der vorderen und hinteren Räder oder Laufwerke und eine Arbeitseinrichtung verfügt, wobei die Baumaschine im Gelände translatorische und/oder rotatorische Bewegungen ausführen und in einem vorgegebenen Arbeitsbereich auf dem Gelände Baukörper errichten oder das Gelände verändern kann. Darüber hinaus betrifft die Erfindung ein Verfahren zum Steuern einer selbstfahrenden Baumaschine.

Es sind verschiedene Arten von selbstfahrenden Baumaschinen bekannt. Zu diesen Maschinen zählen insbesondere die bekannten Straßenfräsmaschinen oder Gleitschalungsfertiger. Diese Baumaschinen zeichnen sich dadurch aus, dass sie über eine Arbeitseinrichtung zum Errichten von Baukörpern auf dem Gelände oder zum Verändern des Geländes verfügen.

Bei den bekannten Straßenfräsen weist die Arbeitseinrichtung eine mit Fräswerkzeugen bestückte Fräswalze auf, mit der von der Straßenoberfläche Material abgefräst werden kann. Die Gleitschalungsfertiger verfügen über eine Einrichtung zum Formen von fließfähigem Material, insbesondere Beton, die auch als Betonmulde bezeichnet wird. Mit der Betonmulde können Baukörper unterschiedlicher Ausbildung, beispielsweise Leitwände oder Wasserrinnen, hergestellt werden.

Bei der Planung und Ausführung des Bauvorhabens mit den bekannten Baumaschinen stellt sich das Problem, dass bereits im Gelände vorhandene Objekte, beispielsweise Wasserabläufe oder Schachtdeckel Berücksichtigung finden müssen. Der Baukörper sollte beispielsweise nicht auf einem Wasserablauf liegen oder von dem Bereich des Geländes, in dem beispielsweise ein Schachtdeckel liegt, sollte nicht Material abgefräst werden.

Zur Berücksichtigung von im Gelände vorhandenen Objekten ist ein Eingriff in die Maschinensteuerung notwendig. Die Fräswalze einer Straßenfräsmaschine muss beispielsweise beim Überfahren eines Schachtdeckels unter Berücksichtigung eines Sicherheitsabstandes innerhalb einer vorgegebenen Wegstrecke, die von den Abmessungen des Schachtdeckels abhängig ist, aus einer vorgegebenen Position in Bezug auf die zu verändernde Oberfläche angehoben werden. Der Maschinenführer kann die genaue Position des Schachtdeckels auf der Höhe der Fräswalze in der Praxis aber nicht erkennen, da sich die Fräswalze unterhalb des Fahrstandes befindet. Daher wird die Position eines Schachtdeckels in dem Gelände in der Praxis mit seitlichen Linien markiert, die für den Maschinenführer oder eine andere Person erkennbar sind. Die Markierung vorhandener Objekte im Gelände erweist sich aber in der Praxis als nachteilig. Zunächst erfordert die Markierung der Objekte einen zusätzlichen Arbeitsschritt. Darüber hinaus ist es schwierig, die Linien exakt im rechten Winkel zur Fahrtrichtung zu ziehen. Ferner sind die Linien bei Dunkelheit nicht oder nur schwer zu erkennen. Im Übrigen ist die Markierung der Objekte bei Regen nicht ohne weiteres möglich. Wegen der Ungenauigkeiten ist es daher erforderlich, einen relativ großen Sicherheitsabstand zu wählen, der größere Nacharbeiten erforderlich macht.

Bei der Veränderung des Geländes oder der Errichtung von Baukörpern auf dem Gelände stellt sich darüber hinaus das Problem, die Bewegung der Baumaschine im Gelände unter Berücksichtigung von im Gelände vorhandenen Objekten zu steuern. Beispielsweise sollte sich die Baumaschine in einem vorgegebenen Abstand entlang eines seitlichen Bordsteins bewegen.

Zur Steuerung von Baumaschinen sind verschiedene Einrichtungen bekannt, mit denen die Planung und Ausführung der Arbeiten erleichtert werden soll.

Die DE 10 2010 048 185 A1 beschreibt eine Einrichtung zur Erleichterung des Manövrierens einer manuell gesteuerten Baumaschine im Gelände, die mit Sensoren den vom Maschinenführer eingestellten Lenkwinkel der Laufwerke erfasst. Die Manövriereinrichtung berechnet dann den Fahrweg der Baumaschine beschreibende Trajektorien, die dem Maschinenführer auf einer Anzeigeeinheit angezeigt werden.

Die EP 2 336 424 A2 beschreibt eine selbstfahrende Baumaschine, die über eine Einheit zur Ermittlung von eine Sollkurve beschreibenden Daten in einem von der Position und Orientierung der Baumaschine unabhängigen Bezugssystem und eine Steuereinheit verfügt, die derart ausgebildet ist, dass sich ein Referenzpunkt auf der Baumaschine ausgehend von einem vorgegebenen Startpunkt, an der die Baumaschine eine vorgegebene Position und Orientierung im Gelände hat, auf der Sollkurve bewegt.

Aus der EP 2 719 829 A1 ist ein Verfahren zur Steuerung einer Baumaschine bekannt, bei dem die eine Sollkurve beschreibenden Daten in einem von der Position und Orientierung der Baumaschine unabhängigen Bezugssystem mittels eines Messgerätes (Rover) im Gelände ermittelt und in einen Arbeitsspeicher der Baumaschine eingelesen werden.

Die US 2009/0016818 A1 und US 2012/0001638 A1 beschreiben Baumaschinen, die über eine Einrichtung zur Erkennung von metallischen Gegenständen verfügen, die unterhalb der Geländeoberfläche liegen können. Wenn ein Gegenstand aus Metall erkannt wird, kann die Straßenfräsmaschine angehalten oder die Fräswalze angehoben werden. Die Erkennung der im Gelände verborgenen Gegenstände kann mit einem Metalldetektor erfolgen.

Der Erfindung liegt die Aufgabe zugrunde, eine selbstfahrende Baumaschine zu schaffen, mit der die Steuerung der Baumaschine unter Berücksichtigung von im Gelände vorhandenen Objekten in der Praxis vereinfacht wird. Eine weitere Aufgabe der Erfindung liegt darin, ein Verfahren anzugeben, mit dem sich die Steuerung der Baumaschine unter Berücksichtigung von im Gelände vorhandenen Objekten vereinfachen lässt.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Die erfindungsgemäße Baumaschine ist eine selbstfahrende Baumaschine, die über eine Arbeitseinrichtung zur Errichtung von Baukörpern auf dem Gelände, beispielsweise eine Einrichtung zum Formen von Beton, oder eine Einrichtung zum Verändern des Geländes, beispielsweise eine Fräswalze, verfügt. Die Arbeitseinrichtung ist derart beschaffen, dass der Baukörper auf dem Gelände innerhalb eines vorgegebenen Arbeitsbereichs errichtet wird oder das Gelände innerhalb eines vorgegebenen Arbeitsbereichs verändert wird. Für die Erfindung ist nicht von Bedeutung, wie die Arbeitseinrichtung im Einzelnen ausgebildet ist. Die Baumaschine kann beispielsweise eine Straßenfräsmaschine oder ein Gleitschalungsfertiger sein. Sie kann auch ein Straßenfertiger oder eine Walze sein, bei der sich das gleiche Problem der Berücksichtigung von im Gelände vorhandenen Objekten stellt.

Die Baumaschine verfügt über eine Bildaufnahme- oder Bildaufzeichnungseinheit zur Aufnahme eines Bildes des Geländes. Das aufgenommene Bild zeigt einen Abschnitt des Geländes, der in einem von der Position und Orientierung der Baumaschine im Gelände abhängigen Koordinatensystem liegt, da sich die Bildaufnahmeeinheit zusammen mit der Baumaschine auf dem Gelände bewegt. Der Bildausschnitt sollte so gewählt werden, dass sämtliche für die Steuerung der Baumaschine relevanten Bereiche erfasst werden, wobei der Bildausschnitt auch Bereiche umfassen kann, die für den Maschinenführer vom Fahrstand aus nicht einsehbar sind. Dadurch wird die Wahrnehmung des Maschinenführers erweitert. Die Bildaufnahmeeinheit kann eine oder mehrere Kameras umfassen. Wenn die Bildaufnahmeeinheit mehrere Kameras aufweist, kann das Gesamtbild aus den Bildern der einzelnen Kameras zusammengesetzt werden.

Darüber hinaus verfügt die Baumaschine über eine Anzeigeeinheit, auf der das aufgenommene Bild angezeigt wird. Das Bild kann beispielsweise auf einem Display angezeigt werden, das auch als Touch-Screen ausgebildet sein kann.

Die Bilddaten der Bildaufnahmeeinheit werden in einer Datenverarbeitungseinheit verarbeitet, die eine Identifizierungseinheit und eine Referenzierungseinheit aufweist. Die Datenverarbeitungseinheit kann Teil der zentralen Steuerungs-, Rechnungs- und/oder Auswerteinheit der Baumaschine sein oder eine selbstständige Einheit bilden. Sie kann einen Mikroprozessor aufweisen, auf dem ein Datenverarbeitungsprogramm (Software) läuft.

Die erfindungsgemäße Baumaschine und das erfindungsgemäße Verfahren zur Steuerung der Baumaschine beruhen auf der Identifizierung von einem oder mehreren für das Bauvorhaben relevanten Objekten in dem Gelände, beispielsweise Schachtdeckel, Wassereinläufe oder Bordsteine, die in dem auf der Anzeigeeinheit angezeigten Bild abgebildet sind. Hierfür verfügt die Datenverarbeitungseinheit über die Identifizierungseinheit, mit der eine Identifizierung eines Objektes von dem Maschinenführer selbst, mit einer Unterstützung durch die Identifizierungseinheit oder ohne den Maschinenführer vollautomatisch erfolgen kann. Unter einer Identifizierung eines Objektes wird in diesem Zusammenhang eine Selektierung eines Objektes verstanden. Wenn aus einer Mehrzahl von unterschiedlichen Objekten ein oder mehrere Objekte ausgewählt werden, kann die Identifikation des Objektes auch die Bestimmung der Art des Objektes einschließen. Die Visualisierung eines tatsächlichen Bildes der Umgebung erlaubt die Identifizierung der Objekte unmittelbar vor Beginn der Arbeiten oder während der Arbeiten, so dass Planung und Ausführung der Arbeiten gleichzeitig oder unmittelbar aufeinander folgen und auch kurzfristige Änderungen der Umgebung Berücksichtigung finden können. Die Planung der in einem nachfolgenden Schritt auszuführenden Arbeiten kann zu einem Zeitpunkt erfolgen, zu dem die Arbeiten ausgeführt werden, die in einem vorausgehenden Schritt geplant worden sind.

In diesem Zusammenhang werden unter den für das Bauvorhaben relevanten Objekten sämtliche Objekte verstanden, die einen Einfluss auf die Position eines im Gelände zu errichtenden Baukörpers oder die Lage des zu verändernden Abschnitts des Geländes haben. Im einfachsten und allgemeinsten Fall kann ein einziger Punkt ein Objekt im Sinne der Erfindung darstellen. Der einzige Punkt kann beispielsweise ein Bildpunkt (Pixel) in einem Bild sein, das sich aus einer Vielzahl von Pixeln zusammensetzt. Dann ist die Identifizierung des Objektes die Selektierung eines Pixels aus der Vielzahl von Pixeln im Bild. Dieser Pixel kann beispielsweise mit einer Maus angeklickt werden. Der Bildpunkt kann aber auch mehrere Pixel umfassen.

Wenn die Objekte Punkte sind, können mit den Punkten beispielsweise der Verlauf des Geländeabschnitts festgelegt werden, der verändert werden oder auf dem ein Baukörper errichtet werden soll bzw. der nicht verändert werden soll oder der unbebaut bleiben soll. Beispielsweise kann das Bauvorhaben darin liegen, mit einer Straßenfräsmaschine den neben einem Bordstein liegenden Straßenbelag abzufräsen. Dann können die zu identifizierenden Objekte beispielsweise Punkte entlang der Bordsteinkante sein. Die zu identifizierenden Objekte können aber auch Linien, beispielsweise eine Startlinie, eine Endlinie, eine oder mehrere Begrenzungslinien eines Gegenstandes, die Umrisslinie eines Gegenstandes oder die von dem Gegenstand im Gelände eingenommene Fläche sein. In diesem Fall können die Objekte selbst durch Punkte, die nachfolgend als Objektpunkte bezeichnet werden, gekennzeichnet werden. Eine Begrenzungslinie kann beispielsweise durch zwei Punkte, beispielsweise ihren Anfangs- und Endpunkt, gekennzeichnet werden. So können beispielsweise störende Objekte identifiziert werden, die in einem Geländeabschnitt liegen, auf dem ein Baukörper errichtet werden soll oder der verändert werden soll. Beispielsweise können die in dem mit einer Straßenfräsmaschine abzufräsenden Geländeabschnitt liegenden Schachtdeckel identifiziert werden.

Für die Erfindung ist entscheidend, dass aus den Bilddaten der Aufnahmeeinheit ein raumbezogener Datensatz ermittelt wird, der Informationen über die Position der identifizierten Objekte in einem von der Bewegung der Baumaschine unabhängigen Bezugssystem enthält. Folglich können aus aktuell vorliegenden Bilddaten Projektdaten erzeugt werden, mit denen sich ein Projekt unmittelbar nach der Aufnahme des Bildes ausführen lässt.

Die Ermittlung des raumbezogenen Datensatzes erfolgt in Abhängigkeit von der Position und Orientierung der Bildaufnahmeeinheit in dem von der Bewegung der Baumaschine unabhängigen Bezugssystem. Hierfür verfügt die Datenverarbeitungseinheit über die Referenzierungseinheit. Die Steuerung der Baumaschine zur Ausführung von translatorischen und/oder rotatorischen Bewegungen auf dem Gelände und/oder zur Errichtung eines Baukörpers auf dem Gelände oder zur Veränderung des Geländes erfolgt dann in Abhängigkeit von dem ermittelten raumbezogenen Datensatz, der die Lage der identifizierten Objekte in einem feststehenden Bezugssystem beschreibt, in dem sich die Baumaschine bewegt. Folglich können die zuvor identifizierten Objekte bei dem Bauvorhaben berücksichtigt werden.

Die Ermittlung des raumbezogenen Datensatzes kann mit den bekannten Verfahren zur Bildmessung (Fotogrammetrie) und Georeferenzierung erfolgen, mit denen den Bilddaten der Bildaufnahmeeinheit raumbezogene Informationen zugewiesen werden, um den raumbezogenen Datensatzes zu generieren. Zur Identifizierung der Objekte können die bekannten Verfahren zur Bilderkennung verwendet werden.

Die Position der in der Bildebene der Bildaufnahmeeinheit abgebildeten Objekte bzw. der auf der Anzeigeeinheit angezeigten Objekte können durch Bildkoordinaten der Bildebene der Bildaufnahmeeinheit bzw. Bildkoordinaten der Anzeigeeinheit beschrieben werden. Beispielsweise ist die Position jedes Bildpunktes (Pixel) durch eine Bildkoordinate des aufgenommenen Bildes eindeutig bestimmt. Die Referenzierungseinheit ist vorzugsweise derart konfiguriert, dass Bildkoordinaten der Abbildung von Objektpunkten der identifizierten Objekte in dem auf der Anzeigeeinheit angezeigten Bild Ortskoordinaten in dem von der Bewegung der Baumaschine unabhängigen Bezugssystem zugewiesen werden. Die Position eines kreisförmigen Schachtdeckels kann beispielsweise durch drei Objektpunkte eindeutig beschrieben werden, die auf dessen Umrisslinie liegen. Die Referenzierungseinheit kann die Bildkoordinaten dieser Objektpunkte bestimmen und in Abhängigkeit von dem bekannten räumlichen Bezug zwischen dem auf die Baumaschine bezogenen Koordinatensystem und dem auf das Gelände bezogenen und von der Bewegung der Baumaschine unabhängigen Koordinatensystem die Ortskoordinaten der Objektpunkte in dem feststehenden Koordinatensystem bestimmen.

Eine bevorzugte Ausführungsform der Erfindung sieht vor, dass die Identifizierungseinheit eine Eingabeeinheit aufweist, die derart konfiguriert ist, dass zur Identifizierung eines Objektes in dem auf der Anzeigeeinheit angezeigten Bild mindestens ein Objektpunkt des zu identifizierenden Objektes markierbar ist. Bei der Verwendung eines Touch-Screens können Anzeige- und Eingabeeinheit eine gemeinsame Einheit bilden. Der Maschinenführer kann das Objekt dann durch Berühren des Touch-Screens identifizieren.

Die Identifizierung des Objektes kann durch Markieren eines oder mehrerer Objektpunkte erfolgen, die auf einer Begrenzungslinie oder auf der Umrisslinie des Objektes liegen. Wenn die Form des Objektes bekannt ist, kann eine verhältnismäßig geringe Anzahl von Objektpunkten zur exakten Beschreibung des Objekts in der Bildebene dienen. Die Umrisslinie eines kreisförmigen Schachtdeckels ist beispielsweise durch drei auf der Umrisslinie liegende Objektpunkte eindeutig bestimmt. Die Umrisslinie bestimmt wiederum eindeutig die räumliche Ausdehnung des Objektes (Fläche). Ein rechteckförmiger Kanaldeckel beispielsweise ist durch seine Eckpunkte eindeutig bestimmt. Die seitliche Begrenzung eines Bauvorhabens durch Bordsteine kann durch eine Linie festgelegt werden, die durch mehrere im Abstand zueinander angeordnete Objektpunkte verläuft. Mit einer größeren Anzahl von Referenzpunkten erhöht sich die Genauigkeit der Positionsbestimmung.

Eine besonders bevorzugte Ausführungsform sieht eine Eingabeeinheit vor, die derart konfiguriert ist, dass aus einer Mehrzahl von Objekten mit einer vorgegebenen Form, beispielsweise einem Kreis für einen Schachtdeckel oder einem Rechteck für einen Wassereinlauf, ein Objekt auswählbar ist, wobei die Identifizierungseinheit derart konfiguriert ist, dass auf der Grundlage der Auswahl eines bestimmten Objektes und des mindestens einen markierten Objektpunktes das Objekt identifiziert wird. Wenn der Maschinenführer auf dem Bild bereits erkannt hat, dass es sich bei dem Objekt beispielsweise um einen kreisförmigen Schachtdeckel handelt, kann er eine entsprechende Auswahl treffen, d. h. auf der Eingabeeinheit einen Schachtdeckel als das erkannte Objekt eingeben. In der Praxis werden die zu identifizierenden Objekte genormte Objekte sein, deren geometrische Abmessungen bekannt sind. Wenn die Abmessungen der Objekte bekannt sind, beispielsweise der Durchmesser des ausgewählten Schachtdeckels, ist es ausreichend als Objektpunkt beispielsweise nur den Mittelpunkt des Schachtdeckels zu markieren, um die Umrisslinie des Schachtdeckels zu kennzeichnen und dessen Fläche in der Bildebene zu bestimmen. Hierfür wird dem genormten Objekt mindestens ein zu markierender Referenzpunkt zugeordnet.

Eine weitere bevorzugte Ausführungsform sieht eine Bilderkennungseinheit vor, die derart konfiguriert ist, dass zur Identifizierung eines Objektes in dem auf der Anzeigeeinheit angezeigten Bild Objekte mit einer vorgegebenen Form erkennbar sind. Diese Ausführungsform erlaubt eine vollautomatische Identifizierung eines Objektes ohne den Maschinenführer, indem die in der Form und den Abmessungen bekannten Objekte, beispielsweise runde Schachtdeckel oder rechteckige Wassereinläufe, von der Bilderkennungseinheit erkannt werden. Mit der Bilderkennung kann aber auch nur eine Vorauswahl getroffen werden, die noch eine Bestätigung durch den Maschinenführer erfordert.

Die Identifizierungseinheit kann sowohl über eine Eingabeeinheit zur Auswahl eines Objektes als auch eine Bilderkennungseinheit verfügen. Dadurch lässt sich die Identifizierung weiter vereinfachen oder aufgrund einer größeren Redundanz die Genauigkeit bei der Identifizierung erhöhen.

Die Art der Steuerung der Baumaschine in Abhängigkeit von dem raumbezogenen Datensatz richtet sich nach dem jeweiligen Bauvorhaben und der Art der Baumaschine. Bei einer Straßenfräsmaschine ist die Arbeitseinrichtung eine gegenüber dem Boden in der Höhe verstellbare Fräswalze zur Veränderung eines vorgegebenen Abschnitts des Geländes, während bei einem Gleitschalungsfertiger die Arbeitseinrichtung eine Einrichtung zum Formen von Beton ist.

Bei einer bevorzugten Ausführungsform der Erfindung, die sowohl bei einer Straßenfräsmaschine als auch einem Gleitschalungsfertiger vorteilhaft ist, weist die Steuereinheit eine Rechen- und Auswerteinheit aufweist, die derart konfiguriert ist, dass die Position des Arbeitsbereichs der Arbeitseinrichtung und die Position des Objektes in dem von der Bewegung der Baumaschine unabhängigen Bezugssystem miteinander verglichen werden. Die Steuereinheit der Baumaschine ist derart konfiguriert, dass Steuersignale zum Ansteuern der Antriebseinrichtung erzeugt werden, so dass die Antriebseinrichtung translatorische und/oder rotatorische Bewegungen derart ausführt, dass während des Vorschubs der Baumaschine der Arbeitsbereich der Arbeitseinrichtung in einem vorgegebenen Abstand zu dem Objekt liegt. Die Baumaschine kann somit beispielsweise dem Verlauf von Bordsteinen im Gelände folgen, deren seitliche Begrenzungslinie als Objekt vom Maschinenführer in dem Bild durch eine Mehrzahl von Objektpunkten markiert werden kann. Anstelle von elektrischen Steuersignalen zur automatischen Steuerung der Baumaschine können aber auch optische und/oder akustische und/oder taktile Signale erzeugt werden, die den Maschinenführer dazu auffordern, einen manuellen Eingriff in die Maschinensteuerung vorzunehmen.

Bei einer Straßenfräsmaschine, deren Arbeitseinrichtung eine gegenüber dem Boden in der Höhe verstellbare Fräswalze ist, weist die Steuereinheit vorteilhafterweise eine Rechen- und Auswerteinheit auf, die derart konfiguriert ist, dass die Position des Arbeitsbereichs der Fräswalze und die Position des Objektes in dem von der Bewegung der Baumaschine unabhängigen Bezugssystem miteinander verglichen werden, wobei die Steuereinheit derart konfiguriert ist, dass in Abhängigkeit von der räumlichen Nähe eines Objektes zu dem Arbeitsbereich der Arbeitseinrichtung Signale erzeugt werden. Diese Signale können Steuersignale zum Ansteuern der Fräswalze bzw. der Hubzylinder sein, so dass die Fräswalze angehoben oder abgesenkt wird. Die Signale können aber auch optische und/oder akustische und/oder taktile Signale sein, um beispielsweise einen Alarm zu geben, so dass der Maschinenführer einen manuellen Eingriff in die Maschinensteuerung vornehmen kann, beispielsweise die Fräswalze anheben oder absenken oder die Baumaschine anhalten kann. In diesem Zusammenhang wird unter räumlicher Nähe das Nebeneinanderliegen, Übereinanderliegen oder das Überschneiden der Flächen des Arbeitsbereichs der Fräswalze und der von dem Objekt in dem Gelände eingenommen Fläche verstanden. Beim Vorschub der Baumaschine wird die Fräswalze angehoben, wenn sich die vordere Begrenzungslinie der Fläche des Arbeitsbereichs der Fräswalze in einem vorgegebenen Abstand vor der hinteren Begrenzungslinie der Fläche des Objektes befindet. Wenn sich die hintere Begrenzungslinie der Fläche des Arbeitsbereichs in einem vorgegebenen Abstand hinter der vorderen Begrenzungslinie der Fläche des Objektes befindet, wird die Fräswalze wieder abgesenkt, so dass das Objekt, beispielsweise der Schachtdeckel, und die Fräswalze nicht beschädigt werden können.

Die Baumaschine weist vorzugsweise eine Einrichtung zur Ermittlung von Positions-/Orientierungs-Daten auf, die die Position und Orientierung der an der Baumaschine vorgesehenen Bildaufnahmeeinheit und die Position der sich in dem Gelände bewegenden Arbeitseinrichtung in dem von der Bewegung der Baumaschine unabhängigen Bezugssystem beschreiben. Diese Einrichtung braucht nicht die Positionen der Bildaufnahmeeinheit und Arbeitseinrichtung direkt zu bestimmen, sondern für die Bestimmung deren Positionen ist die Positionsbestimmung der Baumaschine ausreichend, da zwischen der Baumaschine einerseits und der Bildaufnahmeeinheit und Arbeitseinrichtung andererseits ein fester räumlicher Bezug besteht.

Die Einrichtung zur Ermittlung von Positions-/Orientierungs-Daten kann unterschiedliche Systeme umfassen. Vorzugsweise umfasst die Einrichtung zur Ermittlung der Positions-/Orientierungs-Daten ein globales Navigationssatellitensystem (GNSS), mit dem sämtliche relevanten Daten zur Verfügung stehen. Das globale Navigationssattelitensystem (GNSS) weist vorzugsweise einen ersten und einen zweiten GNSS-Empfänger zur Dekodierung von GNSS-Signalen des globalen Navigationssatellitensystems (GNSS) und Korrektursignalen einer Referenzstation auf, wobei der erste und zweite GNSS-Empfänger an der Baumaschine in unterschiedlichen Positionen angeordnet sind. Mit dem ersten und zweiten GNSS-Empfänger kann die Messgenauigkeit erhöht und die Orientierung erfasst werden. Anstelle eines globalen Navigationssatellitensystems (GNSS) kann die Position und Orientierung auch mit einem satellitenunabhängigen System, beispielsweise mit einem Tachymeter, ermittelt werden. Derartige Systeme, die eine hochpräzise Bestimmung der Positions-/Orientierungs-Daten ermöglichen, gehören zum Stand der Technik.

Anstelle des zweiten GNSS-Empfängers des globalen Navigationssatellitensystems (GNSS) oder anstelle des zweiten satellitenunabhängigen Systems kann auch ein elektronischer Kompass K vorgesehen sein, um die Orientierung zu erfassen. Auf den Kompass kann aber auch verzichtet werden, wenn die Orientierung berechnet wird. Die Berechnung der Orientierung kann dadurch erfolgen, dass die Position eines Referenzpunktes zu aufeinanderfolgenden Zeitpunkten bestimmt und aus der Lageänderung die Richtung der Bewegung bestimmt wird. In die Berechnung der Orientierung kann auch der aktuelle Lenkwinkel der Vorder- und/oder Hinterachse der Baumaschine, der die Orientierung der Baumaschine bestimmt, zu den entsprechenden Zeitpunkten einbezogen werden, um die Genauigkeit zu erhöhen.

Die Bestimmung der Position braucht nicht unmittelbar an einem auf der Bildaufnahmeeinheit oder Arbeitseinrichtung liegenden Referenzpunkt zu erfolgen. Es genügt eine Positionsbestimmung an einem beliebigen Referenzpunkt auf der Baumaschine, da die Position der Bildaufnahmeeinheit, d. h. die Position der Bildebene des Bildaufnehmers der Bildaufnahmeeinheit, und die Position der Arbeitseinrichtung auf der Maschine bekannt ist.

Die Erfassung der Projektdaten und die Veränderung des Geländes oder Errichtung eines Baukörpers können auf der Baustelle ohne eine vorausgehende Bearbeitung der Daten in einem Büro erfolgen. Für die Erfassung der Daten und die Steuerung der Baumaschine kann ein beliebiges geodätisches Bezugssystem bereitgestellt werden, das sich zwischen der Datenerfassung und der Bearbeitung des Geländes nicht ändert.

Wenn die Baumaschine über eine Einrichtung verfügt, die den Maschinenrahmen unabhängig von dem Verlauf des Geländes in einer horizontalen Ausrichtung bzw. in einer zur Oberfläche des Geländes parallelen Ausrichtung hält, braucht nur die Fahrtrichtung der Baumaschine bestimmt zu werden, um die Ausrichtung der Bildaufnahmeeinheit zu bestimmen, da sich die fest am Maschinenrahmen der Baumaschine angebrachte Bildaufnahmeeinheit mit der Baumaschine im Gelände bewegt und der Blickwinkel gegenüber der Horizontalen bzw. gegenüber der Oberfläche des Geländes während des Vorschubs der Maschine unverändert bleibt. Die Identifizierung und Georeferenzierung der Objekte kann dadurch vereinfacht werden, dass die Bildebene der Bildaufnahmeeinheit parallel zur Horizontalen bzw. gegenüber der Oberfläche des Geländes ausgerichtet ist, so dass das Gelände in der Draufsicht abgebildet wird.

Im Folgenden werden verschiedene Ausführungsbeispiele der Erfindung unter Bezugnahme auf die Zeichnungen näher erläutert.

Es zeigen:
- Fig. 1A: ein Ausführungsbeispiel eines Gleitschalungsfertigers in der Seitenansicht,
- Fig. 1B: den Gleitschalungsfertiger von Fig. 1A in der Draufsicht,
- Fig. 2A: ein Ausführungsbeispiel einer Straßenfräsmaschine in der Seitenansicht,
- Fig. 2B: die Straßenfräsmaschine von Fig. 2A in der Draufsicht,
- Fig. 3: die mit einer Straßenfräsmaschine zu bearbeitende Straßenoberfläche,
- Fig. 4: die wesentlichen Komponenten der erfindungsgemäßen Baumaschine in schematischer Darstellung
- Fig. 5: den auf der Anzeigeeinheit der Baumaschine angezeigten Bildausschnitt des Geländes,
- Fig. 6A: ein Objekt und der Arbeitsbereich einer Arbeitseinrichtung der Baumaschine in der X/Y-Ebene des feststehenden Bezugssystems (X, Y, Z) zu einem ersten Zeitpunkt, in dem sich die Arbeitseinrichtung auf das Objekt zubewegt,
- Fig. 6B: ein Objekt und der Arbeitsbereich einer Arbeitseinrichtung der Baumaschine in der X/Y-Ebene des feststehenden Bezugssystems (X, Y, Z) zu einem zweiten Zeitpunkt, in dem die Arbeitseinrichtung das Objekt erreicht hat und
- Fig. 7: ein Objekt und der Arbeitsbereich einer Arbeitseinrichtung der Baumaschine in der X/Y-Ebene des feststehenden Bezugssystems (X, Y, Z), wobei sich die Baumaschine entlang des Objektes bewegt.

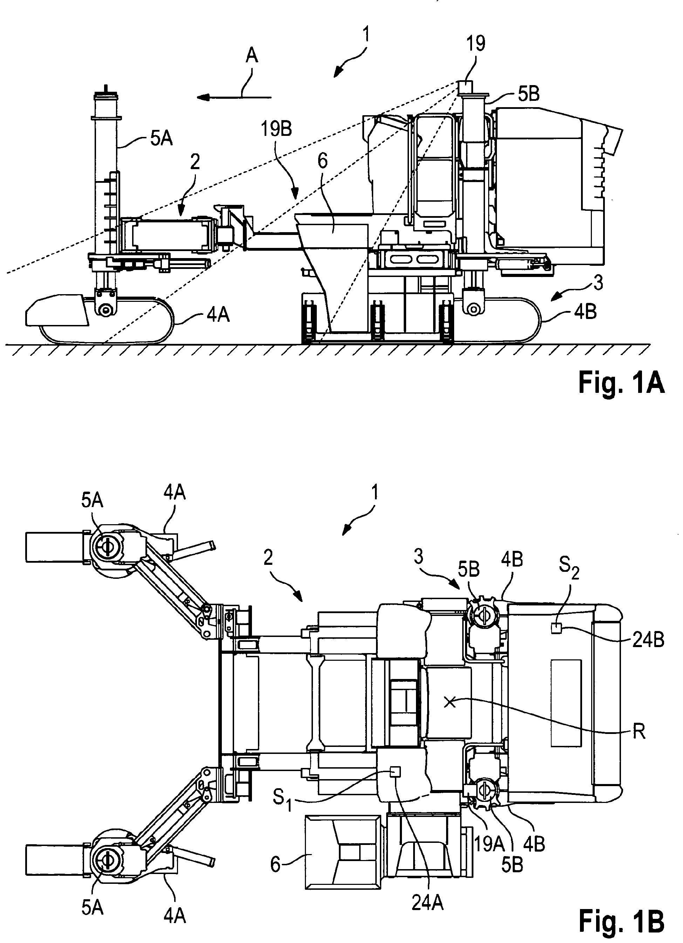

Die Figuren 1A und 1B zeigen in der Seitenansicht und Draufsicht als Beispiel für eine selbstfahrende Baumaschine einen Gleitschalungsfertiger. Ein derartiger Gleitschalungsfertiger ist in der EP 1 103 659 B1 im Einzelnen beschrieben. Da Gleitschalungsfertiger als solche zum Stand der Technik gehören, werden hier nur die für die Erfindung wesentlichen Komponenten der Baumaschine beschrieben.

Der Gleitschalungsfertiger 1 weist einen Maschinenrahmen 2 auf, der von einem Fahrwerk 3 getragen wird. Das Fahrwerk 3 weist zwei vordere und zwei hintere Kettenlaufwerke 4A, 4B auf, die an vorderen und hinteren Hubsäulen 5A, 5B befestigt sind. Die Arbeitsrichtung (Fahrtrichtung) des Gleitschalungsfertigers ist mit einem Pfeil A gekennzeichnet.

Die lenkbaren Kettenlaufwerke 4A, 4B sind Teil der Antriebseinrichtung des Gleitschalungsfertigers zum Ausführen von translatorischen und/oder rotatorischen Bewegungen der Baumaschine auf dem Gelände. Mit den Kettenlaufwerken 4A, 4B kann der Gleitschalungsfertiger vor- und zurückbewegt werden. Durch Anheben und Absenken der Hubsäulen 5A, 5B kann der Maschinenrahmen 2 gegenüber dem Boden in der Höhe und Neigung bewegt werden. Damit hat die Baumaschine drei translatorische und drei rotatorische Freiheitsgrade.

Der Gleitschalungsfertiger 1 verfügt über eine nur andeutungsweise dargestellte Vorrichtung 6 zum Formen von Beton, die nachfolgend als Betonmulde bezeichnet wird. Die Betonmulde 6 ist Teil der Arbeitseinrichtung des Gleitschalungsfertigers zur Errichtung eines Baukörpers mit einer vorgegebenen Form auf dem Gelände.

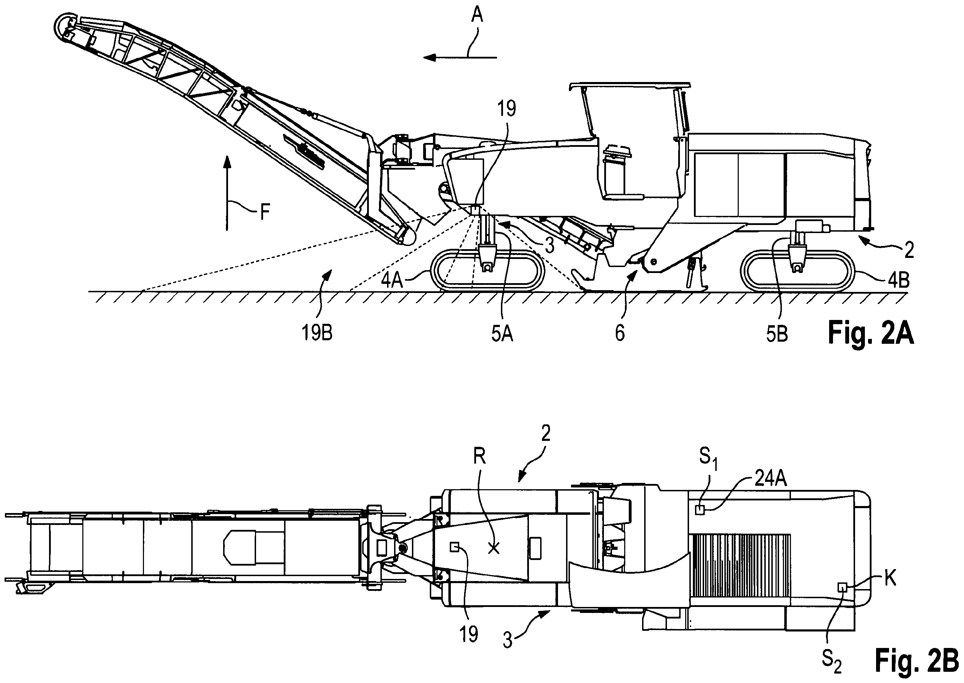

Die Figuren 2A und 2B zeigen als weiteres Beispiel für eine selbstfahrende Baumaschine eine Straßenfräsmaschine, wobei für die einander entsprechenden Teile die gleichen Bezugszeichen verwendet werden. Auch die Straßenfräsmaschine 1 weist einen Maschinenrahmen 2 auf, der von einem Fahrwerk 3 getragen wird. Das Fahrwerk 3 weist wieder vordere und hintere Kettenlaufwerke 4A, 4B auf, die an vorderen und hinteren Hubsäulen 5A, 5B befestigt sind. Die Straßenfräsmaschine verfügt über eine Arbeitseinrichtung zum Verändern des Geländes. Hierbei handelt es sich um eine Fräseinrichtung 6 mit einer mit Fräswerkzeugen bestückten Fräswalze, die in den Figuren aber nicht erkennbar ist. Das Fräsgut wird mit einer Fördereinrichtung F abtransportiert.

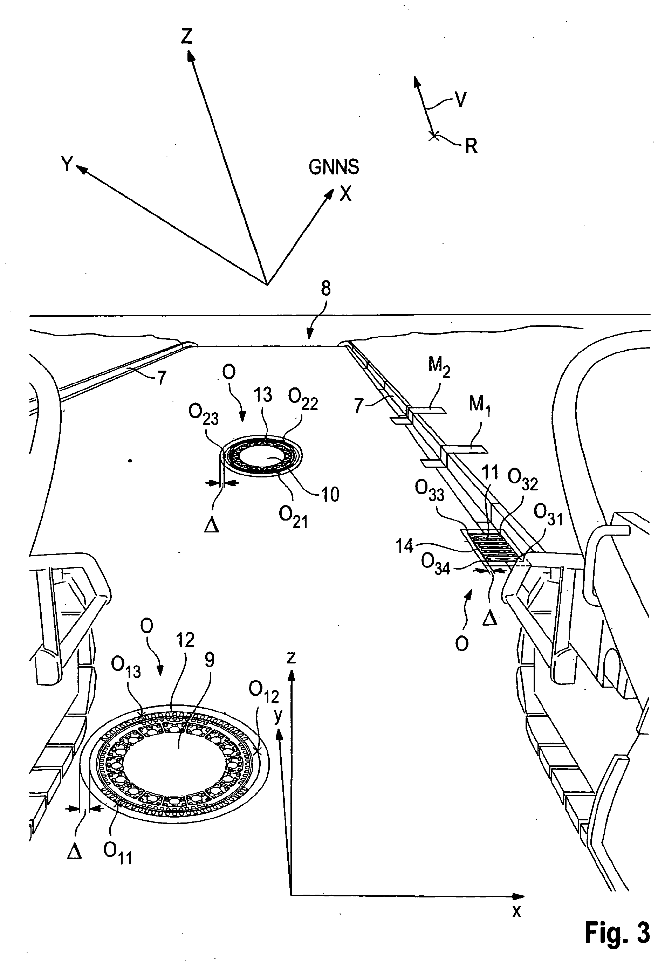

Die mit einer Straßenfräsmaschine zu bearbeitende Straßenoberfläche ist in Fig. 3 dargestellt. Auf dem Gelände verläuft eine von Bordsteinen 7 seitlich begrenzte Straße 8. Bei diesem Ausführungsbeispiel liegt das Projekt darin, den Belag der Straße abzufräsen. Dabei ist zu berücksichtigen, dass sich auf der Straße bestimmte Objekte O befinden, beispielsweise Schachtdeckel in der Mitte des Straßenbelags und Wassereinläufe an der Seite des Straßenbelags. Fig. 3 zeigt zwei Schachtdeckel 9, 10 und einen Wassereinlauf 11, die von der Straßenfräsmaschine beim Abfräsen des Straßenbelags überfahren werden. Die Darstellung in Fig. 3 entspricht aber nicht dem Sichtfeld des Maschinenführers. Die Objekte O auf der Straße kann der Maschinenführer auf dem Fahrstand der Baumaschine nicht sehen, da sie sich unmittelbar vor der Baumaschine oder unterhalb der Maschine befinden. Der Maschinenführer kann den Schachtdeckel insbesondere dann nicht erkennen, wenn sich die Fräswalze nur noch ein kurzes Stück vor dem Schachtdeckel befindet, d. h. genau zu dem Zeitpunkt, zu dem der Maschinenführer die Fräswalze anheben muss. Dieser Bereich kann aber auch mit einer Kamera im Fräswalzengehäuse wegen des umherfliegenden Fräsgutes nicht überwacht werden.

Da der Maschinenführer die Schachtdeckel nicht erkennen kann, werden in der Praxis auf der Höhe der Schachtdeckel seitliche Markierungen angebracht, die in Fig. 3 mit M₁ und M₂ bezeichnet sind. Diese Markierungen sollen dem Maschinenführer oder einer anderen Person ermöglichen, die Position der Schachtdeckel zu erkennen, so dass die Fräswalze rechtzeitig angehoben werden kann. Derartige Markierungen sind aber bei der erfindungsgemäßen Baumaschine nicht erforderlich.

Die kreisförmigen Schachtdeckel 9, 10 können eindeutig durch drei auf der kreisförmigen Umrisslinie des Schachtdeckels liegende Referenzpunkte O₁₁, O₁₂, O₁₃ und O₂₁, O₂₂, O₂₃ beschrieben werden. Die rechteckförmigen Wassereinläufe können durch vier Referenzpunkte O₃₁, O₃₂, O₃₃, O₃₄ beschrieben werden, die an den Ecken des Wassereinlaufs liegen. Die Umrisslinien 12, 13, 14 bestimmen die Flächen, die von den Objekten O im Gelände eingenommen werden.

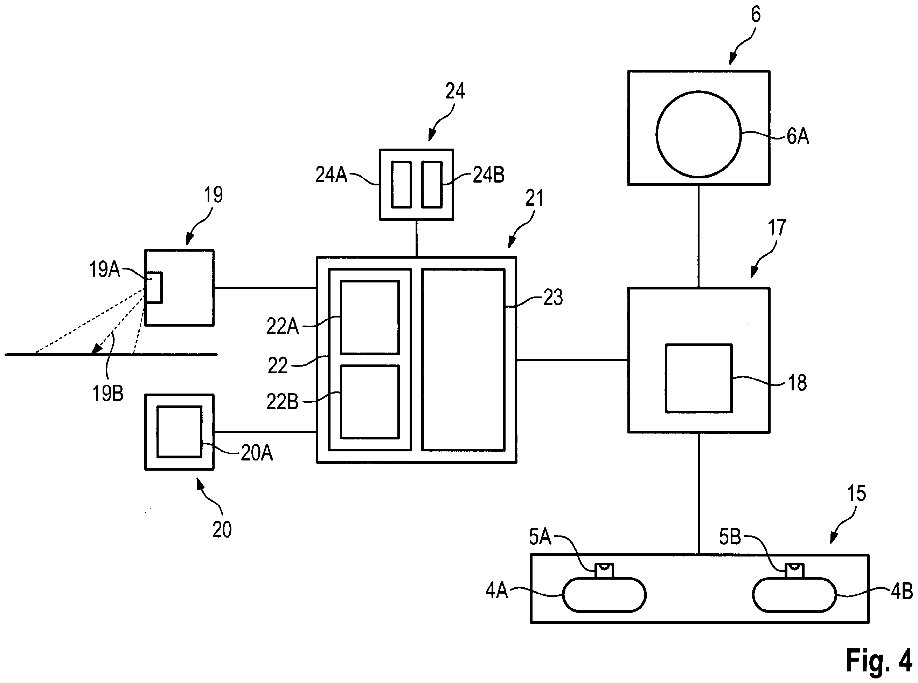

Fig. 4 zeigt in schematischer Darstellung die für die Erfindung relevanten Komponenten der Baumaschine, die mit den gleichen Bezugszeichen wie in den Fig. 1A, 1B und Fig. 2A, 2B bezeichnet sind.

Die Baumaschine, die im vorliegenden Ausführungsbeispiel eine Straßenfräsmaschine ist, verfügt über eine Antriebseinrichtung 15 mit lenkbaren vorderen und hinteren Rädern oder Laufwerken 4A, 4B und über Hubsäulen 5A, 5B, so dass die Baumaschine im Gelände translatorische und rotatorische Bewegungen ausführen und der Maschinenrahmen 2 angehoben bzw. abgesenkt werden kann. Zur Veränderung des Geländes weist die Straßenfräsmaschine eine Arbeitseinrichtung 6 mit einer höhenverstellbaren Fräswalze 6A auf, die einen vorgegebenen Arbeitsbereich hat. Die Steuerung der Antriebseinrichtung 15 und Arbeitseinrichtung 6 erfolgt mit einer zentralen Steuereinheit 17, die eine Rechen- und Auswerteinheit 18 aufweist.

Darüber hinaus verfügt die Baumaschine über eine Bildaufnahmeeinheit 19, die mindestens ein am Maschinenrahmen 2 angeordnetes Kamera-System 19A aufweist, mit dem ein Abschnitt des zu bearbeitenden Geländes, d. h. des Straßenbelags mit den Bordsteinen, Schachtdeckeln und Wassereinläufen, aufgenommen wird. Das Kamera-System 19A erfasst einen Abschnitt des Geländes, der in Arbeitsrichtung A vor dem Arbeitsbereich der Arbeitseinrichtung 6, insbesondere der Fräswalze, liegt. Zumindest ein Teil dieses Geländeabschnitts ist von dem Maschinenführer auf dem Fahrstand nicht einsehbar.

Das Kamera-System 19A hat eine bestimmte äußere und innere Orientierung. Der Standort des Kamera-Systems19A in dem Gelände sowie dessen Blickrichtung 19B bestimmen die äußere Orientierung und die abbildungsrelevanten Parameter der Kamera die innere Orientierung.

Nachfolgend wird der sich bei der Bewegung der Baumaschine ständig ändernde Standort des Kamera-Systems 19A im Gelände als die Position des Kamera-Systems und die Blickrichtung als die Orientierung des Kamera-Systems bezeichnet. Wenn sich die Baumaschine im Gelände bewegt, ändern sich laufend die Position und Orientierung des Kamera-Systems in einem von der Bewegung der Kamera unabhängigen Bezugssystem, da das Kamera-System fest am Maschinenrahmen montiert ist. Das von dem Kamera-System unabhängige Bezugssystem ist in Fig. 3 mit (X, Y, Z) bezeichnet. Gegenüber dem Maschinenrahmen ändert sich Position und Orientierung des Kamera-Systems hingegen nicht.

Das Kamera-System kann eine Kamera oder zwei Kameras (Stereokamera-System) umfassen. Wenn bei der Aufnahme mit einer Kamera eine dreidimensionale Szene auf die zweidimensionale Bildebene der Kamera abgebildet wird, ergibt sich ein eindeutiger Zusammenhang zwischen den Koordinaten eines Objektes, den Koordinaten der Abbildung des Objektes auf der Bildebene und der Brennweite der Kamera. Allerdings geht durch die zweidimensionale Abbildung die Tiefeninformation verloren.

Für die Erfindung ist ausreichend, wenn das Kamera-System nur eine Kamera aufweist, da in der Praxis die Krümmung der Geländeoberfläche in dem von der Kamera aufgenommenen Bildausschnitt vernachlässigt werden kann. Außerdem sind für die Erfindung nur zweidimensionale Szenen relevant, d. h. die Umrisslinien der Objekte in einer Ebene (Geländeoberfläche). Darauf ist die Erfindung aber nicht beschränkt.

Zur Erfassung dreidimensionaler Szenen und/oder der Berücksichtigung einer Krümmung der Geländeoberfläche kann das mindestens einer Kamera-System der Bildaufzeichnungseinheit auch ein Stereokamera-System sein, das zwei Kameras umfasst, die achsparallel in einem vorgegebenen horizontalen Abstand angeordnet sind, um nach den bekannten Verfahren aus der Disparität die Tiefeninformation gewinnen zu können.

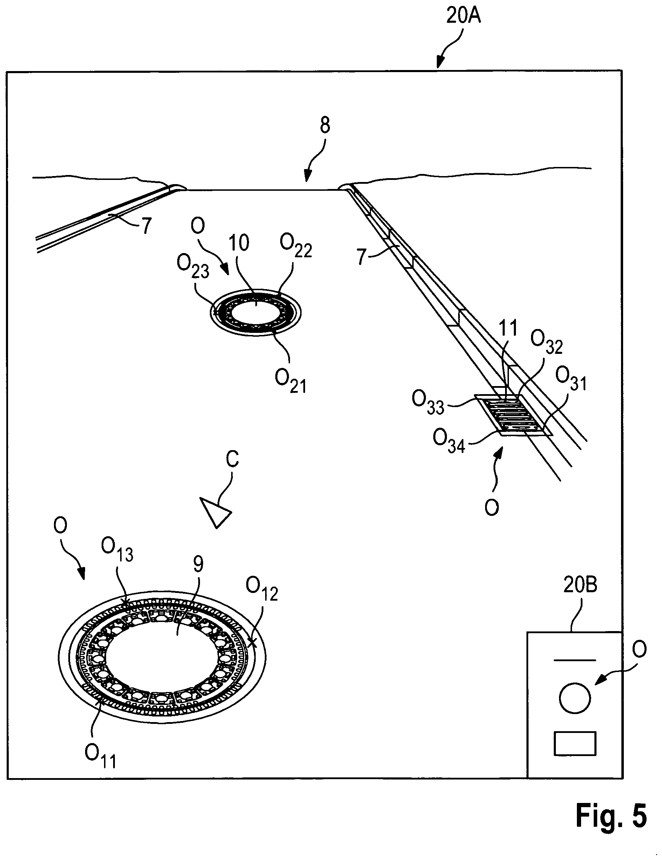

Die Baumaschine verfügt weiterhin über eine Anzeigeeinheit 20 mit einem Display 20A, auf dem ein vorgegebener Bildausschnitt des von der Kamera 19A aufgenommenen Bildes angezeigt wird. Fig. 5 zeigt das Display 20A der Anzeigeeinheit 20, auf dem der Maschinenführer den für das Bauvorhaben relevanten Abschnitt des Geländes sieht. Wenn das Kamera-System ein Stereokamera-System ist können auf der Anzeigeeinheit 20 mit den bekannten Verfahren auch dreidimensionale Bilder angezeigt werden. Nachfolgend wird das Kamera-System der Einfachheit halber auch als Messkamera oder Kamera bezeichnet.

Die Bildaufnahmeeinheit 19 macht mit der Messkamera 19A eine fotogrammetrische Bildaufnahme des Geländes. Für die messtechnischen Zwecke werden die Bilddaten der Bildaufnahmeeinheit 19 in einer Datenverarbeitungseinheit 21 verarbeitet. Die Datenverarbeitungseinheit 21 weist eine Identifizierungseinheit 22 und eine Referenzierungseinheit 23 auf, die nachfolgend noch im Einzelnen beschrieben werden.

Zur Ermittlung der Position und Orientierung der Baumaschine und damit auch der Position und Orientierung (Blickrichtung) der Kamera 19A und der Position des Arbeitsbereichs der Arbeitseinrichtung 7 in dem von der Position und Orientierung der Baumaschine unabhängigen Koordinatensystem (X, Y, Z) verfügt die Baumaschine über eine Einrichtung 24, die Positions-/Orientierungs-Daten der Baumaschine bereitstellt, die sich auf einen beliebigen Referenzpunkt R am Maschinenrahmen der Baumaschine beziehen können (Fig. 1 B, Fig. 2B). Die Position und Orientierung (Arbeitsrichtung) der Baumaschine kann beispielsweise durch einen Vektor V in einem GNSS-Koordinatensystem beschrieben werden, dessen Ursprung auf dem Referenzpunkt R der Maschine liegt (Fig. 3). Die Einrichtung 24 weist bei dem vorliegenden Ausführungsbeispiel einen ersten GNSS-Empfänger 24A und zweiten GNSS-Empfänger 24B auf, die an der Baumaschine in unterschiedlichen Positionen S1, S2 angeordnet sind (Fig. 1 B, Fig. 2B). Der erste und zweite GNSS-Empfänger 24A, 24B dekodieren für die Bestimmung der Position und Orientierung der Baumaschine die GNSS-Signale des globalen Navigationssatellitensystems (GNSS) und Korrektursignale einer Referenzstation. Anstelle des zweiten GNSS-Empfängers 24B kann aber auch ein elektronischer Kompass vorgesehen sein, um die Orientierung der Baumaschine zu erfassen. Auf den Kompass kann auch verzichtet werden, wenn die Orientierung der Baumaschine, d. h. die Richtung, in der sich die Baumaschine bewegt, aus den fortlaufenden Positions-/Orientierungs-Daten ggf. unter Berücksichtigung der eingestellten Lenkwinkel oder sonstiger Maschinenparameter berechnet wird.

Mit der Position und Orientierung der Baumaschine in dem von der Bewegung der Baumaschine unabhängigen GNSS-Koordinatensystem (X, Y, Z) steht auch die Position und Orientierung (Blickrichtung 19B) der Kamera 19A fest. Da die Position der Kamera am Maschinenrahmen bekannt ist, können aus den Positions-/Orientierungs-Daten der Baumaschine, die sich auf einen beliebigen Referenzpunkt R am Maschinenrahmen der Baumaschine beziehen können, Positions-/Orientierungs-Daten berechnet werden, die Informationen über die Position und Orientierung der Kamera 19A in dem von der Baumaschine unabhängigen GNSS-Koordinatensystem (X, Y, Z) enthalten.

Bei dem vorliegenden Ausführungsbeispiel ist die zentrale Steuereinheit 17 der Baumaschine derart konfiguriert, dass der Maschinenrahmen 2 beim Vorschub der Baumaschine immer in einer bestimmten Ausrichtung, insbesondere in einer horizontalen Ausrichtung bzw. in einer Ausrichtung parallel zu der zu bearbeitenden Oberfläche verbleibt. Eine derartige Steuereinheit ist in der DE 10 2006 062 129 A1 beschrieben. Folglich ändert sich der Blickwinkel 19B der Kamera 19A beim Vorschub der Maschine gegenüber dem von der Bewegung der Baumaschine unabhängigen GNSS-Koordinatensystem (X, Y, Z) nicht. Dadurch wird die Auswertung der Bilddaten vereinfacht. Für den Fall, dass sich die Ausrichtung der Maschine allerdings ändern sollte, versteht sich von selbst, dass auch ein sich mit der Ausrichtung der Maschine ändernder Blickwinkel 19B der Kamera 19A berücksichtigt werden kann, weil die Ausrichtung der Maschine z. B. gegenüber der Horizontalen bzw. gegenüber der Oberfläche des Geländes bekannt ist.

Aus den Positions-/Orientierungs-Daten der Baumaschine werden auch Positionsdaten berechnet, die Informationen über die Position des Arbeitsbereichs der Arbeitseinrichtung enthalten, dessen räumliche Abmessungen bekannt sind. Der Arbeitsbereich der Fräswalze wird beispielsweise von deren bekannten Abmessungen und der eingestellten Frästiefe bestimmt. Der Arbeitsbereich einer Betonmulde wird ebenfalls von deren Abmessungen bestimmt, die den Abmessungen des zu errichtenden Baukörpers entsprechen.

Die von dem GNSS-System bereitgestellten Positions-/Orientierungs-Daten der Baumaschine werden von der Datenverarbeitungseinheit 21 empfangen, die laufend die aktuellen Positions-/Orientierungs-Daten der Kamera 19A und die Positionsdaten des Arbeitsbereichs der Arbeitseinrichtung 6 berechnet.

Zu Beginn des Bauvorhabens oder während der Durchführung des Bauvorhabens kann der Maschinenführer der Straßenfräsmaschine die in dem abzufräsenden Straßenbelag liegenden Objekte O, beispielsweise die Schachtdeckel 9, 10, auf dem Display 20A der Anzeigeeinheit 20 erkennen. Die Aufgabe der Identifizierungseinheit 22 der Datenverarbeitungseinheit 21 liegt darin, diese Objekte O zu identifizieren. Dabei kann der Maschinenführer die Identifizierungseinheit 22 durch Eingabe von Informationen unterstützen. Hierfür verfügt die Identifizierungseinheit 22 über eine Eingabeeinheit 22A. Darüber hinaus kann die Identifizierungseinheit 22 noch eine Bilderkennungseinheit 22B aufweisen.

Die Eingabeeinheit 22A der Identifizierungseinheit 22 ist derart ausgebildet, dass der Maschinenführer bestimmte Objektpunkte O₁₁, O₁₂, O₁₃, O₂₁, O₂₂, O₂₃, O₃₁, O₃₂, O₃₃, O₃₄ (Fig. 3) in dem auf der Anzeigeeinheit 20 angezeigten Bild markieren kann (Fig. 5). Die Markierung der Objektpunkte auf dem Display 20A kann beispielsweise mit einem Cursor C per Mausklick erfolgen. Wenn die Anzeigeeinheit 20 als Touch-Screen ausgebildet ist, können die Objektpunkte auch mit dem Finger markiert werden.

Darüber hinaus ist die Eingabeeinheit 22A derart ausgebildet, dass der Maschinenführer zwischen bestimmten vorgegebenen Objekten O, beispielsweise zwischen einem Kanaldeckel oder einem Wassereinlauf auswählen kann. Diese Auswahl kann der Maschinenführer mit den bekannten Techniken, beispielsweise mit einem Cursor C per Mausklick in einer Menüleiste 20B treffen. In einem Speicher der Identifizierungseinheit 22 sind die bekannten Abmessungen der betreffenden Objekte O gespeichert.

Bei einem Ausführungsbeispiel wählt der Maschinenführer in der Menüleiste 20B per Mausklick das betreffende Objekt O aus, beispielsweise einen Schachtdeckel 9, 10, und markiert mit dem Cursor per Mausklick auf den Umrisslinien der Objekte O (9, 10) liegende Objektpunkte Oₙₘ. Der Maschinenführer kann beispielsweise bei Auswahl eines Schachtdeckels die Objektpunkte O₁₁, O₁₂, O₁₃, O₂₁, O₂₂, O₂₃ der Schachtdeckel 9, 10 oder bei der Auswahl eines Wassereinlaufs 11 die Objektpunkte O₃₁, O₃₂, O₃₃, O₃₄ des Wassereinlaufs markieren. Damit sind die von den Objekten O in der Bildebene eingenommen Flächen eindeutig bestimmt. Es können aber auch mehr als drei bzw. vier Objektpunkte ausgewählt werden. Eine Unterscheidung zwischen einem Schachtdeckel und einem Wassereinlauf kann auch allein durch die Anzahl der aufeinanderfolgenden Mausklicks, d. h. drei Mausklicks zur Markierung der drei Objektpunkte eines Schachtdeckels und vier Mausklicks zur Markierung der vier Objektpunkte eines Wassereinlaufs, getroffen werden.

Ein anderes Ausführungsbeispiel sieht eine Identifizierung der Objekte O auch ohne Unterstützung des Maschinenführers vor. Bei diesem Ausführungsbeispiel weist die Identifizierungseinheit 22 eine Bilderkennungseinheit 22B auf, mit der die einzelnen Objekte O automatisch erkannt werden. Die Bilderkennung kann mit den bekannten Verfahren zur Mustererkennung erfolgen.

Schließlich können die Eingabeeinheit 22A und die Bilderkennungseinheit 22B auch zusammenwirken, wobei die Markierung von Objektpunkten Oₙₘ die Bilderkennung unterstützen kann, wodurch die Genauigkeit beim Identifizieren der Objekte aufgrund der Redundanz erhöht werden kann. Für die Identifizierung der Objekte O können sämtliche zur Verfügung stehenden Eingabe- und Auswahltechniken verwendet werden.

Nach der Identifizierung der einzelnen Objekte sind die Form der Objekte O, beispielsweise Kreis oder Rechteck, und die Position der Objekte in einem Bezugssystem bestimmt, das sich auf die Baumaschine, insbesondere die Kamera bezieht. Dieses Koordinatensystem ist in Fig. 3 mit (x, y, z) bezeichnet.

Das von der Bewegung der Baumaschine im Gelände abhängige Koordinatensystem (x, y, z) kann ein dreidimensionales oder zweidimensionales Koordinatensystem sein. In Fig. 3 ist der allgemeine Fall eines Koordinatensystem mit einer x-Achse, y-Achse und einer z-Achse gezeigt. Bei einer zu vernachlässigenden Krümmung der Geländeoberfläche und der Betrachtung nur zweidimensionaler Objekte ist aber ein zweidimensionales Koordinatensystem ausreichend. Dies setzt aber voraus, dass die x/y-Ebene parallel zu der als eben angenommen Geländeoberfläche liegt, was nachfolgend angenommen wird.

Die Referenzierungseinheit 23 ist derart konfiguriert, dass aus den Bilddaten der einzelnen Objekte O mit den Positions-/Orientierungs-Daten der Kamera 19A ein raumbezogener Datensatz [(X₁, Y₁, Z₁), (X₂, Y₂, Z₂), (X₃, Y₃, Z₃) ... (Xₙ, Yₙ, Zₙ)] ermittelt wird, der Informationen über die Position der identifizierten Objekte in dem von der Bewegung der Baumaschine unabhängigen GNSS-Bezugssystem (X, Y, Z) enthält. Damit ist die Position der Objekte O in demselben Koordinatensystem bestimmt, in dem auch die Position des Arbeitsbereichs der Arbeitseinrichtung 6 bestimmt ist. In diesem feststehenden Koordinatensystem werden sich die Objekte während des Vorschubs der Baumaschine nicht bewegen, während sich der Arbeitsbereich der Arbeitseinrichtung bewegt.

Die Generierung des raumbezogenen Datensatzes [(X₁, Y₁, Z₁), (X₂, Y₂, Z₂), (X₃, Y₃, Z₃) ... (Xₙ, Yₙ, Zₙ)] erfolgt vorzugsweise dadurch, dass den Objektpunkten der einzelnen Objekte Bildkoordinaten (xₙ, yₙ, zₙ) zugewiesen werden, die Lage und Fläche der Objekte in dem von der Bewegung der Baumaschine abhängigen Bezugssystem (x, y, z) beschreiben, und den Bildkoordinaten Ortskoordinaten (Xₙ, Yₙ, Zₙ) in dem von der Bewegung der Baumaschine unabhängigen GNSS-Bezugssystem (X, Y, Z) zugewiesen werden. Hierzu können die bekannten Verfahren zur Georeferenzierung verwendet werden, mit denen zu bestimmten Bildpunkte n auf dem Bild die zugehörigen Geodaten ermittelt werden, wobei jedem Bildpunkt auf dem Bild (Pixel) eine bestimmte räumliche Lage auf der Erdoberfläche zugewiesen wird. Da sich die in der Form bekannten Objekte O durch nur wenige Objektpunkte Oₙₘ eindeutig beschreiben lassen, sind auch zur Bestimmung der Bildkoordinaten nur wenige Bildpunkte (Pixel) erforderlich. Es ist aber auch möglich, die Objekte durch sämtliche Bildpunkte (Pixel) zu beschreiben, die das Objekt auf dem Display 20A der Anzeigeeinheit 20 abbilden.

Nach der Datentransformation sind sowohl die Position des oder der Objekte O als auch die Position des Arbeitsbereichs der Arbeitseinrichtung 6 in dem von der Bewegung der Baumaschine unabhängigen GNSS-Bezugssystem (X, Y, Z) bekannt.

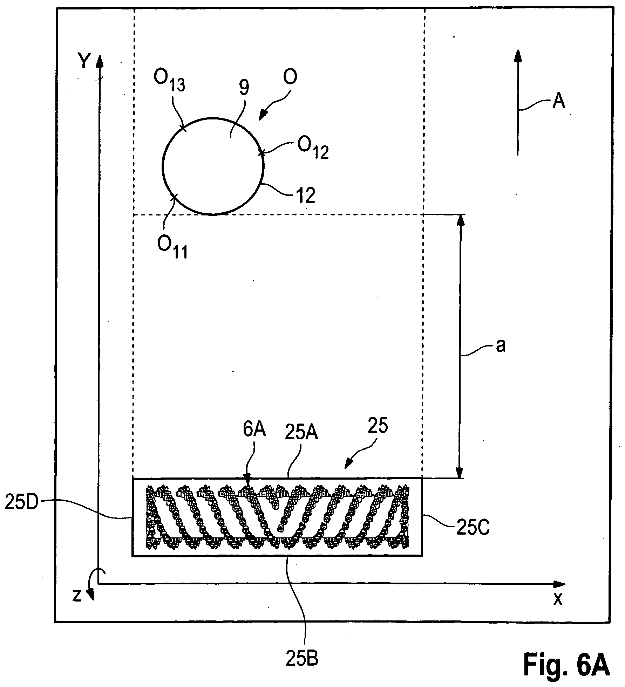

Fig. 6A zeigt für den Fall einer Straßenfräsmaschine in dem GNSS-Bezugssystem (X, Y, Z) die Position des Arbeitsbereichs 25 der Fräswalze 6A und die Position eines in Arbeitsrichtung A noch weit vor dem Arbeitsbereich der Fräswalze liegenden Schachtdeckels 9 zu einem bestimmten Zeitpunkt während des Vorschubs der Fräsmaschine, wobei sich die Fräsmaschine auf den Schachtdeckel zubewegt. Der Schachtdeckel 9 ist in der X/Y-Ebene des GNSS-Bezugssystem (X, Y, Z) eine kreisförmige Fläche.

Die Fräswalze 6A weist einen rechteckförmigen Arbeitsbereich 25 auf, der von den geometrischen Abmessungen des zylindrischen Walzenkörpers bestimmt wird. Der Arbeitsbereich 25 wird durch eine in Arbeitsrichtung vordere Begrenzungslinie 25A, eine hintere Begrenzungslinie 25B und seitliche Begrenzungslinien 25C, 25D begrenzt. Diese Linien kennzeichnen den Bereich, an denen die Fräsmeißel der Fräswalze 6A in die Oberfläche des Geländes eindringen. Die Fräswalze 6A kann durch Ausfahren bzw. Einfahren der Hubsäulen 5A, 5B in Bezug auf die Bodenoberfläche angehoben oder abgesenkt werden. Wenn die Fräswalze 6A angehoben oder abgesenkt wird, verändert sich der rechteckförmige Arbeitsbereich 25 der Fräswalze 6A. Ein Anheben der Fräswalze 6A führt zu einer Verringerung des Abstandes zwischen der vorderen und hinteren Begrenzungslinie 25A, 25B, während ein Absenken der Fräswalze zu einer Vergrößerung des Abstandes zwischen der vorderen und hinteren Begrenzungslinie 25A, 25B führt. Da die Höhe der Fräswalze 6A gegenüber dem Boden und die geometrischen Abmessungen der Fräswalze bekannt sind, kann die rechteckförmige Fläche des Arbeitsbereichs 25 der Fräswalze 6A in der X/Y-Ebene des GNSS-Bezugssystems (X, Y, Z) berechnet werden. Der Schachtdeckel 9 ist in der X/Y-Ebene des GNSS-Bezugssystems (X, Y, Z) eine kreisförmige Fläche.

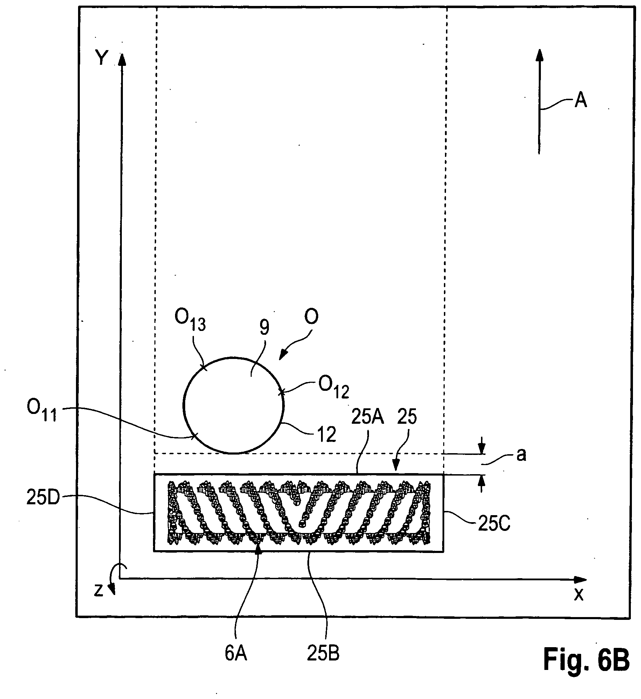

Fig. 6B zeigt die Position des Arbeitsbereichs 25 der Fräswalze 6A und die Position des unmittelbar vor dem Arbeitsbereich der Fräswalze liegenden Schachtdeckels 9. Die Rechen- und Auswerteinheit 18 der Steuereinheit 17 ist derart konfiguriert, dass die Position des rechteckförmigen Arbeitsbereichs 25 der Fräswalze 6A und die Position des kreisförmigen Schachtdeckels 9 in dem GNSS-Bezugssystems (X, Y, Z) laufend miteinander verglichen werden, um die räumlichen Nähe der rechteckförmigen Fläche und der kreisförmigen Fläche zu ermitteln. Die Steuereinheit 17 der Straßenfräsmaschine ist derart konfiguriert, dass in Abhängigkeit von der räumlichen Nähe eines Objektes O zu dem Arbeitsbereich 25 der Fräswalze 6A Steuersignale erzeugt werden, so dass die Fräswalze angehoben oder abgesenkt wird. Fig. 6B zeigt, wie die vordere Begrenzungslinie 25A des Arbeitsbereichs 25 der Fräswalze 6A die Umrisslinie 12 des kreisförmigen Schachdeckels 9 erreicht. Der Abstand zwischen Fräswalze 6A und Schachdeckel 9 ist in den Fig. 6A und 6B mit a bezeichnet. Wenn der Abstand a zwischen Fräswalze und Schachdeckel kleiner als ein vorgegebener Grenzwert Δ ist (Fig. 3), erzeugt die Steuereinheit 17 ein Steuersignal zur Betätigung der Hubsäulen 5A, 5B, so dass die Fräswalze gegenüber dem Boden angehoben wird. Dadurch können Schachtdeckel und Fräswalze nicht beschädigt werden, wenn die Straßenfräsmaschine den Schachtdeckel überfährt. Wenn nach dem Überfahren des Schachtdeckels der Abstand a zwischen der hinteren Begrenzungslinie 25B des Arbeitsbereichs 25 der Fräswalze 6A und der Umrisslinie 12 des kreisförmigen Schachdeckels 9 größer als ein vorgegebener Grenzwert Δ ist, erzeugt die Steuereinheit 17 ein Steuersignal zum Absenken der Fräswalze 6A, so dass der Fräsvorgang wieder fortgesetzt wird.

Der Eingriff in die Maschinensteuerung kann auch darin liegen, dass die Maschine automatisch gestoppt wird. Der Maschinenführer kann die Fräswalze dann anheben und die Maschine wieder starten. Es ist auch möglich, dass die Steuereinheit 17 ein Alarmsignal erzeugt, so dass ein Alarm gegeben wird, wenn sich ein störendes Objekt O im Arbeitsbereich 25 der Fräswalze 6A nähert.

Nachfolgend wird ein Ausführungsbeispiel beschrieben, bei dem die Baumaschine, beispielsweise eine Straßenfräsmaschine oder ein Gleitschalungsfertiger, in einem vorgegebenen Abstand entlang einer seitlichen Begrenzungslinie gesteuert wird, beispielsweise die Baumaschine entlang einer Bordsteinkante oder einer Wasserrinne fahren soll, die der Maschinenführer auf dem Display sehen kann.

Der Maschineführer kann beispielsweise in dem Bild auf einer Bordsteinkante oder einer Wasserrinne liegende Objektpunkte markieren, um eine durch die Objektpunkte verlaufende Linie zu identifizieren. Bei einer geraden Bordsteinkante beispielsweise kann der Maschinenführer als Objekt eine gerade Linie auswählen und in dem Bild einen Anfangs- und Endpunkt der Linie markieren, um die gerade Linie in dem von der Bewegung der Baumaschine abhängigen Bezugssystem (x, y, z) zu identifizieren.

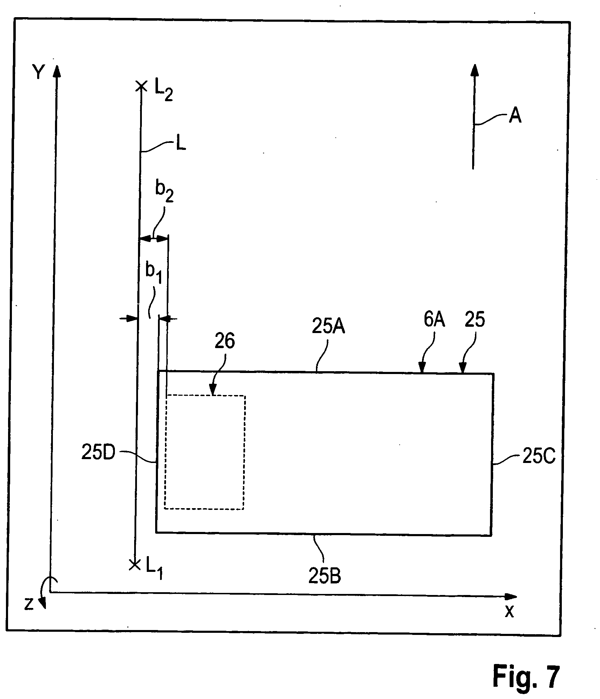

Fig. 7 zeigt die zugehörige Linie L als Objekt in der X/Y-Ebene des von der Bewegung der Baumaschine unabhängigen GNSS-Bezugssystems (X, Y, Z), in dem die Rechen- und Auswerteinheit 18 der Steuereinheit 17 die Position des Objektes (Linie) mit der Position des Arbeitsbereichs der Arbeitseinrichtung vergleicht. Anfangs- und Endpunkt der Linie L sind mit L₁, L₂ bezeichnet. In Fig. 7 ist für den Fall einer Straßenfräsmaschine der rechteckförmige Arbeitsbereich 25 der Fräswalze 6A in durchgezogener Linie und für den Fall eines Gleitschalungsfertigers der rechteckförmige Arbeitsbereich 26 der Betonmulde, d. h. der Bereich des Geländes, auf dem der Baukörper, beispielsweise eine Leitwand errichtet werden soll, in gestrichelter Linie gezeigt. Die Steuereinheit 17 der Baumaschine ist derart konfiguriert, dass Steuersignale zum Ansteuern der Antriebseinrichtung 6 erzeugt werden, so dass die Antriebseinrichtung 15 translatorische und/oder rotatorische Bewegungen derart ausführt, dass während des Vorschubs der Baumaschine der Arbeitsbereich 25, 26 der Arbeitseinrichtung 6, beispielsweise der Fräswalze 6A bzw. der Betonmulde in einem vorgegebenen Abstand b₁ bzw. b₂ zu der Linie L (Objekt) liegt. Folglich folgt die Baumaschine der Bordsteinkante oder der Wasserrinne, so dass die Straße neben der Bordsteinkante oder Wasserrinne abgefräst oder die Leitwand neben der Bordsteinkante oder der Wasserrinne errichtet wird. Während des Vorschubs der Baumaschine können auch weitere Objekte, beispielsweise Kanaldeckel, bei der Steuerung der Baumaschine Berücksichtigung finden, um beispielsweise die Fräswalze anzuheben oder abzusenken.

## Patentansprüche

1. Selbstfahrende Baumaschine mit
einem Fahrwerk (3), das in Arbeitsrichtung vordere und hintere Räder oder Laufwerke (4A, 4B) aufweist,
einer Antriebseinrichtung (15) zum Antreiben der vorderen und/oder hinteren Räder oder Laufwerke (4A, 4B),
einer Arbeitseinrichtung (6) zur Errichtung von Baukörpern auf dem Gelände in einem vorgegebenen Arbeitsbereich (25, 26) der Arbeitseinrichtung (6) oder zum Verändern des Geländes in einem vorgegebenen Arbeitsbereich der Arbeitseinrichtung,
einer Steuereinheit (17) zur Steuerung der Antriebeinrichtung (15) und/oder der Arbeitseinrichtung (6) derart, dass die Baumaschine auf dem Gelände translatorische und/oder rotatorische Bewegungen ausführt und/oder die Arbeitseinrichtung (6) auf dem Gelände einen Baukörper errichtet oder das Gelände verändert,
einer Bildaufnahmeeinheit (19) zum Aufnehmen eines Bildes des Geländes,
einer Anzeigeeinheit (20) zur Anzeige des mit der Bildaufnahmeeinheit (19) aufgenommenen Bildes des Geländes, und
einer Datenverarbeitungseinheit (21) zur Verarbeitung der Bilddaten der B ildaufnahmeeinheit,
**dadurch gekennzeichnet, dass** die Datenverarbeitungseinheit (21) aufweist:
eine Identifizierungseinheit (22), die derart konfiguriert ist, dass in dem auf der Anzeigeeinheit (20) angezeigten Bild abgebildete Objekte (O) des Geländes identifizierbar sind,
eine Referenzierungseinheit (23), die derart konfiguriert ist, dass aus den Bilddaten der Bildaufnahmeeinheit (19) in Abhängigkeit von der Position und Orientierung der Bildaufnahmeeinheit in einem von der Bewegung der Baumaschine im Gelände unabhängigen Bezugssystem (X, Y, Z) ein raumbezogener Datensatz [(X₁, Y₁, Z₁), (X₂, Y₂, Z₂), (X₃, Y₃, Z₃) ... (Xₙ, Yₙ, Zₙ)] ermittelt wird, der Informationen über die Position der identifizierten Objekte (O) in dem von der Bewegung der Baumaschine unabhängigen Bezugssystem (X, Y, Z) enthält und
dass die Steuereinheit (17) derart konfiguriert ist, dass die Antriebseinrichtung (15) zur Ausführung von translatorischen und/oder rotatorischen Bewegungen auf dem Gelände und/oder die Arbeitseinrichtung (6) zur Errichtung eines Baukörpers auf dem Gelände oder zur Veränderung des Geländes in Abhängigkeit von dem ermittelten raumbezogenen Datensatz [(X₁, Y₁, Z₁), (X₂, Y₂, Z₂), (X₃, Y₃, Z₃) ... (Xₙ, Yₙ, Zₙ)] angesteuert wird.

2. Selbstfahrende Baumaschine nach Anspruch 1, **dadurch gekennzeichnet, dass** die Identifizierungseinheit (22) eine Eingabeeinheit (22A) aufweist, die derart konfiguriert ist, dass zur Identifizierung eines Objektes (O) in dem auf der Anzeigeeinheit (20) angezeigten Bild mindestens ein Objektpunkt (Oₙₘ) des zu identifizierenden Objektes markierbar ist.

3. Selbstfahrende Baumaschine nach Anspruch 2, **dadurch gekennzeichnet, dass** die Eingabeeinheit (22A) derart konfiguriert ist, dass aus einer Mehrzahl von Objekten (O) mit einer vorgegebenen Form ein Objekt auswählbar ist, wobei die Identifizierungseinheit (22) derart konfiguriert ist, dass auf der Grundlage der Auswahl eines bestimmten Objektes und des mindestens einen markierten Objektpunktes (Oₙₘ) das Objekt identifiziert wird.

4. Selbstfahrende Baumaschine nach einem der Ansprüche 1 bis 3, **dadurch gekennzeichnet, dass** die Identifizierungseinheit (22) eine Bilderkennungseinheit (22B) aufweist, die derart konfiguriert ist, dass zur Identifizierung eines Objektes in dem auf der Anzeigeeinheit (20) angezeigten Bild Objekte (O) mit einer vorgegebenen Form erkennbar sind.

5. Selbstfahrende Baumaschine nach einem der Ansprüche 1 bis 4, **dadurch gekennzeichnet, dass** die Referenzierungseinheit (23) derart konfiguriert ist, dass Bildkoordinaten der Abbildung von Objektpunkten (Oₙₘ) der identifizierten Objekte (O) in dem auf der Anzeigeeinheit (20) angezeigten Bild Ortskoordinaten (Xₙ, Yₙ, Zₙ) in dem von der Bewegung der Baumaschine unabhängigen Bezugssystem (X, Y, Z) zugewiesen werden.

6. Selbstfahrende Baumaschine nach einem der Ansprüche 1 bis 5, **dadurch gekennzeichnet, dass** die Baumaschine eine Straßenfräsmaschine ist, wobei die Arbeitseinrichtung (6) eine gegenüber dem Boden in der Höhe verstellbare Fräswalze (6A) zur Veränderung eines vorgegebenen Abschnitts des Geländes aufweist, oder die Baumaschine ein Gleitschalungsfertiger ist, wobei die Arbeitseinrichtung (6) eine Einrichtung zum Formen von Beton aufweist, wobei die Steuereinheit (17) eine Rechen- und Auswerteinheit (18) aufweist, die derart konfiguriert ist, dass die Position des Arbeitsbereichs (25, 26) der Arbeitseinrichtung (6) und die Position des Objektes (O) in dem von der Bewegung der Baumaschine unabhängigen Bezugssystem (X, Y, Z) miteinander verglichen werden,
wobei die Steuereinheit (17) derart konfiguriert ist, dass Steuersignale zum Ansteuern der Antriebseinrichtung (15) erzeugt werden, so dass die Antriebseinrichtung (15) translatorische und/oder rotatorische Bewegungen derart ausführt, dass während des Vorschubs der Baumaschine der Arbeitsbereich (25, 26) der Arbeitseinrichtung (6) in einem vorgegebenen Abstand (b₁, b₂) zu dem Objekt liegt.

7. Selbstfahrende Baumaschine nach einem der Ansprüche 1 bis 5, **dadurch gekennzeichnet, dass** die Baumaschine eine Straßenfräsmaschine ist, wobei die Arbeitseinrichtung (6) eine gegenüber dem Boden in der Höhe verstellbare Fräswalze (6A) zur Veränderung eines vorgegebenen Abschnitts des Geländes aufweist, wobei die Steuereinheit (17) eine Rechen- und Auswerteinheit (18) aufweist, die derart konfiguriert ist, dass die Position des Arbeitsbereichs (25) der Fräswalze (6A) und die Position des Objektes (O) in dem von der Bewegung der Baumaschine unabhängigen Bezugssystem (X, Y, Z) miteinander verglichen werden,
wobei die Steuereinheit (17) derart konfiguriert ist, dass in Abhängigkeit von der räumlichen Nähe eines Objektes (O) zu dem Arbeitsbereich (25) der Fräswalze (6A) Signale erzeugt werden.

8. Selbstfahrende Baumaschine nach einem der Ansprüche 1 bis 7, **dadurch gekennzeichnet, dass** die Baumaschine eine Einrichtung zur Ermittlung von die Position und Orientierung der Bildaufnahmeeinheit (19) und die Position des Arbeitsbereichs (25, 26) der Arbeitseinrichtung (6) beschreibende Positions-/Orientierungs-Daten in dem von der Bewegung der Baumaschine unabhängigen Bezugssystem (X, Y, Z) aufweist.

9. Selbstfahrende Baumaschine nach Anspruch 8, **dadurch gekennzeichnet, dass** die Einrichtung zur Ermittlung der Positions-/Orientierungs-Daten ein globales Navigationssatellitensystem (GNSS) umfasst.

10. Verfahren zum Steuern einer selbstfahrenden auf dem Gelände translatorische und/oder rotatorische Bewegungen ausführenden Baumaschine, die auf dem Gelände einen Baukörper errichtet oder das Gelände verändert, mit folgenden Verfahrens schritten:
Aufnehmen eines Bildes des Geländes mit einer Bildaufnahmeeinheit (19),
Anzeigen des aufgenommenen Bildes des Geländes auf einer Anzeigeeinheit (20),
Identifizieren eines oder mehrerer Objekte (O), die in dem Bild abgebildet sind,
Ermitteln eines raumbezogenen Datensatz [(X₁, Y₁, Z₁), (X₂, Y₂, Z₂), (X₃, Y₃, Z₃) ... (Xₙ, Yₙ, Zₙ)], der Informationen über die Position der identifizierten Objekte (O) in einem von der Bewegung der Baumaschine unabhängigen Bezugssystem (X, Y, Z) enthält, aus den Bilddaten der Bildaufnahmeeinheit (19) in Abhängigkeit von der Position und Orientierung der Bildaufnahmeeinheit in dem von der Bewegung der Baumaschine unabhängigen Bezugssystem (X, Y, Z) und
Steuern der Baumaschine zur Ausführung von translatorischen und/oder rotatorischen Bewegungen auf dem Gelände und/oder zur Errichtung eines Baukörpers auf dem Gelände oder zur Veränderung des Geländes in Abhängigkeit von dem ermittelten raumbezogenen Datensatz [(X₁, Y₁, Z₁), (X₂, Y₂, Z₂), (X₃, Y₃, Z₃) ... (Xₙ, Yₙ, Zₙ)].

11. Verfahren nach Anspruch 10, **dadurch gekennzeichnet, dass** zur Identifizierung eines Objektes (O) in dem auf der Anzeigeeinheit (20) angezeigten Bild mindestens ein Objektpunkt (Oₙₘ) des zu identifizierenden Objektes markiert wird.

12. Verfahren nach Anspruch 11, **dadurch gekennzeichnet, dass** aus einer Mehrzahl von Objekten (O) mit einer vorgegebenen Form ein Objekt ausgewählt wird, wobei auf der Grundlage der Auswahl eines bestimmten Objektes und des mindestens einen markierten Objektpunktes (Oₙₘ) das Objekt identifiziert wird.

13. Verfahren nach einem der Ansprüche 10 bis 12, **dadurch gekennzeichnet, dass** zur Identifizierung eines Objektes in dem auf der Anzeigeeinheit (20) angezeigten Bild Objekte (O) mit einer vorgegebenen Form erkannt werden.

14. Verfahren nach einem der Ansprüche 10 bis 13, **dadurch gekennzeichnet, dass** Bildkoordinaten der Abbildung von Objektpunkten (Oₙₘ) der identifizierten Objekte (O) in dem auf der Anzeigeeinheit (20) angezeigten Bild Ortskoordinaten (Xₙ, Yₙ, Zₙ) in dem von der Bewegung der Baumaschine unabhängigen Bezugssystem (X, Y, Z) zugewiesen werden.

15. Verfahren nach einem der Ansprüche 10 bis 14, **dadurch gekennzeichnet, dass** die Position des Arbeitsbereichs (25, 26) der Arbeitseinrichtung (6) und die Position des Objektes (O) in dem von der Bewegung der Baumaschine unabhängigen Bezugssystem (X, Y, Z) miteinander verglichen werden, wobei die Baumaschine derart gesteuert wird, dass während des Vorschubs der Baumaschine der Arbeitsbereich (25, 26) der Arbeitseinrichtung (6) in einem vorgegebenen Abstand (b₁, b₂) zu dem Objekt (O) liegt und/oder die Baumaschine derart gesteuert wird, dass in Abhängigkeit von der räumlichen Nähe eines Objektes (O) zu dem Arbeitsbereich (25, 26) der Arbeitseinrichtung Steuersignale für einen Eingriff in die Maschinensteuerung und/oder die Auslösung eines Alarms erzeugt werden.

16. Verfahren nach einem der Ansprüche 10 bis 15, **dadurch gekennzeichnet, dass** die Position und Orientierung der Bildaufnahmeeinheit (19) oder die Position des Arbeitsbereichs (25, 26) der Arbeitseinrichtung (6) beschreibende Positions-/Orientierungs-Daten in dem von der Bewegung der Baumaschine unabhängigen Bezugssystem (X, Y, Z) mit einem globalen Navigationssatellitensystem (GNSS) ermittelt werden.

## Claims

1. Self-propelled construction machine comprising
a chassis (3) which comprises front and rear wheels or running gears (4A, 4B) in the working direction,
a drive device (15) for driving the front and/or rear wheels or running gears (4A, 4B),
a working device (6) for installing structures on the terrain in a predetermined working region (25, 26) of the working device (6) or for altering the terrain in a predetermined working region of the working device,
a control unit (17) for controlling the drive device (15) and/or the working device (6) such that the construction machine carries out translational and/or rotational movements on the terrain and/or the drive device (6) installs a structure on the terrain or alters the terrain,
an image capturing unit (19) for capturing an image of the terrain,
a display unit (20) for displaying the image of the terrain as captured by the image capturing unit (19), and
a data processing unit (21) for processing the image data from the image capturing unit,
**characterised in that** the data processing unit (21) comprises:
an identification unit (22) which is configured such that objects (O) of the terrain represented in the image displayed on the display unit (20) can be identified,
a referencing unit (23) which is configured such that a spatial data set [X₁, Y₁, Z₁), (X₂, Y₂, Z₂), (X₃, Y₃, Z₃) ... (Xₙ, Yₙ, Zₙ)] containing information regarding the position of the identified objects (O) in the reference system (X, Y, Z) which is independent of the movement of the construction machine is determined from the image data of the image capturing unit (19) on the basis of the position and orientation of the image capturing unit in a reference system (X, Y, Z) which is independent of the movement of the construction machine on the terrain, and
**in that** the control unit (17) is configured such that the drive device (15) is actuated on the basis of the determined spatial data set [(X₁, V₁, Z₁), (X₂, Y₂, Z₂), (X₃, Y₃, Z₃) ... (Xₙ, Yₙ, Zₙ)] in order to carry out translational and/or rotational movements on the terrain and/or such that the working device (6) is actuated on the basis of the determined spatial data set in order to install a structure on the terrain or to alter the terrain.

2. Self-propelled construction machine according to claim 1, **characterised in that** the identification unit (22) comprises an input unit (22A) which is configured such that, in order to identify an object (O) in the image displayed on the display unit (20), at least one object point (Oₙₘ) on the object to be identified can be marked.

3. Self-propelled construction machine according to claim 2, **characterised in that** the input unit (22A) is configured such that an object can be selected from a plurality of objects (O) having a predetermined shape, the identification unit (22) being configured such that the object is identified on the basis of the selection of both a particular object and the at least one marked object point (Oₙₘ).

4. Self-propelled construction machine according to any of claims 1 to 3, **characterised in that** the identification unit (22) comprises an image recognition unit (22B) which is configured such that, in order to identify an object in the image displayed on the display unit (20), objects (O) having a predetermined shape can be recognised.

5. Self-propelled construction machine according to any of claims 1 to 4, **characterised in that** the referencing unit (23) is configured such that image coordinates of the image of object points (Oₙₘ) on the identified objects (O) in the image displayed on the display unit (20) are allocated location coordinates (Xₙ, Yₙ, Zₙ) in the reference system (X, Y, Z) which is independent of the movement of the construction machine.

6. Self-propelled construction machine according to any of claims 1 to 5, **characterised in that** the construction machine is a road milling machine, the working device (6) comprising a milling roller (6A) which is vertically adjustable relative to the ground in order to alter a predetermined portion of the terrain, or the construction machine is a slipform paver, the working device (6) comprising a device for moulding concrete, the control unit (17) comprising an arithmetic and evaluation unit (18) which is configured such that a comparison is made between the position of the working region (25, 26) of the working device (6) and the position of the object (O) in the reference system (X, Y, Z) which is independent of the movement of the construction machine,
the control unit (17) being configured such that control signals for actuating the drive device (15) are generated so that the drive device (15) carries out translational and/or rotational movements in such a way that, during the advance of the construction machine, the working region (25, 26) of the working device (6) is at a predetermined distance (b₁, b₂) from the object.

7. Self-propelled construction machine according to any of claims 1 to 5, **characterised in that** the construction machine is a road milling machine, the working device (6) comprising a milling roller (6A) which is vertically adjustable relative to the ground in order to alter a predetermined portion of the terrain, the control unit (17) comprising an arithmetic and evaluation unit (18) which is configured such that a comparison is made between the position of the working region (25) of the milling roller (6A) and the position of the object (O) in the reference system (X, Y, Z) which is independent of the movement of the construction machine,
the control unit (17) being configured such that signals are generated on the basis of the proximity of an object (O) to the working region (25) of the milling roller (6A).

8. Self-propelled construction machine according to any of claims 1 to 7, **characterised in that** the construction machine comprises a device for determining position and orientation data, which describe the position and orientation of the image capturing unit (19) and the position of the working region (25, 26) of the working device (6), in the reference system (X, Y, Z) which is independent of the movement of the construction machine.

9. Self-propelled construction machine according to claim 8, **characterised in that** the device for determining the position and orientation data comprises a global navigation satellite system (GNSS).

10. Method for controlling a self-propelled construction machine which carries out translational and/or rotational movements on the terrain and either installs a structure on the terrain or alters the terrain, comprising the following method steps:
capturing an image of the terrain using an image capturing unit (19),
displaying the captured image of the terrain on a display unit (20),
identifying one or more objects (O) represented in the image,
determining, from the image data of the image capturing unit (19), a spatial data set [(X₁, V₁, Z₁), (X₂, Y₂, Z₂), (X₃, Y₃, Z₃) ... (Xₙ, Yₙ, Zₙ)] containing information regarding the position of the identified objects (O) in a reference system (X, Y, Z) which is independent of the movement of the construction machine, on the basis of the position and orientation of the image capturing unit in the reference system (X, Y, Z) which is independent of the movement of the construction machine, and
controlling the construction machine in order to carry out translational and/or rotational movements on the terrain and/or to install a structure on the terrain or to alter the terrain on the basis of the determined spatial data set [(X₁, Y₁, Z₁), (X₂, Y₂, Z₂), (X₃, Y₃, Z₃) ... (Xₙ, Yₙ, Zₙ)].

11. Method according to claim 10, **characterised in that**, in order to identify an object (O) in the image displayed on the display unit (20), at least one object point (Oₙₘ) on the object to be identified is marked.

12. Method according to claim 11, **characterised in that** an object is selected from a plurality of objects (O) of a predetermined shape, the object being identified on the basis of the selection of both a particular object and the at least one marked object point (Oₙₘ).

13. Method according to any of claims 10 to 12, **characterised in that**, in order to identify an object in the image displayed on the display unit (20), objects (O) of a predetermined shape are recognised.

14. Method according to any of claims 10 to 13, **characterised in that** image coordinates of the image of object points (Oₙₘ) on the identified objects (O) in the image displayed on the display unit (20) are allocated location coordinates (Xₙ, Yₙ, Zₙ) in the reference system (X, Y, Z) which is independent of the movement of the construction machine.

15. Method according to any of claims 10 to 14, **characterised in that** a comparison is made between the position of the working region (25, 26) of the working device (6) and the position of the object (O) in the reference system (X, Y, Z) which is independent of the movement of the construction machine, the construction machine being controlled such that, during the advance of the construction machine, the working region (25, 26) of the working device (6) is at a predetermined distance (b₁, b₂) from the object (O) and/or the construction machine is controlled such that control signals are generated for the purpose of both an intervention in the machine control and/or sounding an alarm on the basis of the proximity of an object (O) to the working region (25, 26) of the working device.

16. Method according to any of claims 10 to 15, **characterised in that** position and orientation data, which describe the position and orientation of the image capturing unit (19) or the position of the working region (25, 26) of the working device (6), in the reference system (X, Y, Z) which is independent of the movement of the construction machine, are determined by a global navigation satellite system (GNSS).

## Revendications

1. Engin de construction autopropulsé comprenant
un train de roulement (3), qui présente, dans la direction de travail, des roues avant et arrière ou des trains de roues (4A, 4B),
un dispositif d'entraînement (15) servant à entraîner les roues avant et/ou arrière ou les trains de roues (4A, 4B),
un dispositif de travail (6) servant à ériger des corps de construction sur le terrain dans une zone de travail (25, 26) spécifiée du dispositif de travail (6) ou servant à modifier le terrain dans une zone de travail spécifiée du dispositif de travail,
une unité de commande (17) servant à commander le dispositif d'entraînement (15) et/ou le dispositif de travail (6) de telle manière que l'engin de construction exécute sur le terrain des déplacements par translation et/ou par rotation et/ou que le dispositif de travail (6) érige sur le terrain un corps de construction ou modifie le terrain,
une unité de prise d'images (19) servant à prendre une image du terrain,
une unité d'affichage (20) servant à afficher l'image du terrain prise à l'aide de l'unité de prise d'images (19), et
une unité de traitement de données (21) servant à traiter les données d'images de l'unité de prise d'images,
**caractérisé en ce que** l'unité de traitement de données (21) présente :
une unité d'identification (22), qui est configurée de telle manière que des objets (O) du terrain reproduits sur l'image affichée sur l'unité d'affichage (20) peuvent être identifiés ;
une unité de référencement (23) qui est configurée de telle manière qu'est déterminé, à partir des données d'images de l'unité de prise d'images (19), en fonction de la position et de l'orientation de l'unité de prise d'images dans un système de référence (X, Y, Z) indépendant du déplacement de l'engin de construction sur le terrain, un jeu de données [(X₁, Y₁, Z₁), (X₂, Y₂, Z₂), (X₃, Y₃, Z₃) ... (Xₙ, Yₙ, Zₙ)] rapporté à l'espace, lequel contient des informations sur la position des objets (O) identifiés dans le système de référence (X, Y, Z) indépendant du déplacement de l'engin de construction, et
**en ce que** l'unité de commande (17) est configurée de telle manière que le dispositif d'entraînement (15) est piloté afin d'exécuter des déplacements par translation et/ou par rotation sur le terrain et/ou que le dispositif de travail (6) est piloté afin d'ériger un corps de construction sur le terrain ou afin de modifier le terrain en fonction du jeu de données [(X₁, Y₁, Z₁), (X₂, Y₂, Z₂), (X₃, Y₃, Z₃)... (Xₙ, Yₙ, Zₙ)] rapporté à l'espace déterminé.

2. Engin de construction autopropulsé selon la revendication 1, **caractérisé en ce que** l'unité d'identification (22) présente une unité d'entrée (22A), qui est configurée de telle manière qu'au moins un point d'objet (Oₙₘ) de l'objet à identifier peut être marqué afin d'identifier un objet (O) sur l'image affichée sur l'unité d'affichage (20).

3. Engin de construction autopropulsé selon la revendication 2, **caractérisé en ce que** l'unité d'entrée (22A) est configurée de telle manière qu'un objet peut être choisi parmi une multitude d'objets (O) présentant une forme spécifiée, dans lequel l'unité d'identification (22) est configurée de telle manière que l'objet est identifié sur la base du choix d'un objet défini et de l'au moins un point d'objet (Oₙₘ) marqué.

4. Engin de construction autopropulsé selon l'une quelconque des revendications 1 à 3, **caractérisé en ce que** l'unité d'identification (22) présente une unité de reconnaissance d'image (22B), qui est configurée de telle manière que des objets (O) présentant une forme spécifiée peuvent être reconnus afin d'identifier un objet sur l'image affichée sur l'unité d'affichage (20).

5. Engin de construction autopropulsé selon l'une quelconque des revendications 1 à 4, **caractérisé en ce que** l'unité de référencement (23) est configurée de telle manière que des coordonnées d'image de la reproduction de points d'objet (Oₙₘ) des objets (O) identifiés sur l'image affichée sur l'unité d'affichage (20) sont attribuées à des coordonnées de lieu (Xₙ, Yₙ, Zₙ) dans le système de référence (X, Y, Z) indépendant du déplacement de l'engin de construction.

6. Engin de construction autopropulsé selon l'une quelconque des revendications 1 à 5, **caractérisé en ce que** l'engin de construction est un engin de fraisage routier, dans lequel le dispositif de travail (6) présente un cylindre de fraisage (6A) pouvant être ajusté en hauteur par rapport au sol servant à modifier une portion spécifiée du terrain, ou **en ce que** l'engin de construction est un finisseur à coffrages glissants, dans lequel le dispositif de travail (6) présente un dispositif servant à mouler du béton, dans lequel l'unité de commande (17) présente une unité de calcul et d'analyse (18), qui est configurée de telle manière que la position de la zone de travail (25, 26) du dispositif de travail (6) et la position de l'objet (O) dans le système de référence (Y, Y, Z) indépendant du déplacement de l'engin de construction sont comparées entre elles,
dans lequel l'unité de commande (17) est configurée de telle manière que des signaux de commande sont produits afin de piloter le dispositif d'entraînement (15) de sorte que le dispositif d'entraînement (15) exécute des déplacements par translation et/ou par rotation de telle manière qu'au cours de l'avancement de l'engin de construction la zone de travail (25, 26) du dispositif de travail (6) se trouve à une distance (b₁, b₂) spécifiée par rapport à l'objet.

7. Engin de construction autopropulsé selon l'une quelconque des revendications 1 à 5, **caractérisé en ce que** l'engin de construction est un engin de fraisage routier, dans lequel le dispositif de travail (6) présente un cylindre de fraisage (6A) pouvant être ajusté en hauteur par rapport au sol servant à modifier une portion spécifiée du terrain, dans lequel l'unité de commande (17) présente une unité de calcul et d'analyse (18), qui est configurée de telle manière que la position de la zone de travail (25) du cylindre de fraisage (6A) et la position de l'objet (O) dans le système de référence (X, Y, Z) indépendant du déplacement de l'engin de construction sont comparées entre elles,
dans lequel l'unité de commande (17) est configurée de telle manière que des signaux sont produits en fonction de la proximité spatiale d'un objet (O) par rapport à la zone de travail (25) du cylindre de fraisage (6A).

8. Engin de construction autopropulsé selon l'une quelconque des revendications 1 à 7, **caractérisé en ce que** l'engin de construction présente un dispositif servant à déterminer des données de position/d'orientation décrivant la position et l'orientation de l'unité de prise d'images (19) et la position de la zone de travail (25, 26) du dispositif de travail (6) dans le système de référence (X, Y, Z) indépendant du déplacement de l'engin de construction.

9. Engin de construction autopropulsé selon la revendication 8, **caractérisé en ce que** le dispositif servant à déterminer les données de position/d'orientation comprend un système global de navigation par satellites (GNSS).

10. Procédé servant à commander un engin de construction autopropulsé exécutant sur le terrain des déplacements par translation et/ou par rotation, lequel érige sur le terrain un corps de construction ou modifie le terrain, comprenant les étapes de procédé qui suivent :
la prise d'une image du terrain avec une unité de prise d'images (19),
l'affichage de l'image prise du terrain sur une unité d'affichage (20),
l'identification d'un ou de plusieurs objets (O), qui sont reproduits sur l'image,
la détermination d'un jeu de données [(X₁, Y₁, Z₁), (X₂, Y₂, Z₂), (X₃, Y₃, Z₃) ... (Xₙ, Yₙ, Zₙ)] rapporté à l'espace, lequel contient des informations sur la position des objets (O) identifiés dans un système de référence (X, Y, Z) indépendant du déplacement de l'engin de construction, à partir des données d'images de l'unité de prise d'images (19) en fonction de la position et de l'orientation de l'unité de prise d'images dans le système de référence (X, Y, Z) indépendant du déplacement de l'engin de construction, et
la commande de l'engin de construction afin d'exécuter des déplacements par translation et/ou par rotation sur le terrain et/ou d'ériger un corps de construction sur le terrain ou de modifier le terrain en fonction du jeu de données [(X₁, Y₁, Z₁), (X₂, Y₂, Z₂), (X₃, Y₃, Z₃) ... (Xₙ, Yₙ, Zₙ)] rapporté à l'espace déterminé.

11. Procédé selon la revendication 10, **caractérisé en ce qu'**au moins un point d'objet (Oₙₘ) de l'objet à identifier est marqué afin d'identifier un objet (O) sur l'image affichée sur l'unité d'affichage (20).

12. Procédé selon la revendication 11, **caractérisé en ce qu'**un objet est choisi parmi une multitude d'objets (O) présentant une forme spécifiée, l'objet étant identifié sur la base du choix d'un objet défini et de l'au moins un point d'objet (Oₙₘ) marqué.

13. Procédé selon l'une quelconque des revendications 10 à 12, **caractérisé en ce que** des objets (O) présentant une forme spécifiée sont reconnus afin d'identifier un objet sur l'image affichée sur l'unité d'affichage (20).

14. Procédé selon l'une quelconque des revendications 10 à 13, **caractérisé en ce que** des coordonnées d'image de la reproduction de points d'objet (Oₙₘ) des objets (O) identifiés sur l'image affichée sur l'unité d'affichage (20) sont attribuées à des coordonnées de lieu (Xₙ, Yₙ, Zₙ) dans le système de référence (X, Y, Z) indépendant du déplacement de l'engin de construction.

15. Procédé selon l'une quelconque des revendications 10 à 14, **caractérisé en ce que** la position de la zone de travail (25, 26) du dispositif de travail (6) et la position de l'objet (O) dans le système de référence (Y, Y, Z) indépendant du déplacement de l'engin de construction sont comparées entre elles, dans lequel l'engin de construction est commandé de telle manière qu'au cours de l'avancement de l'engin de construction, la zone de travail (25, 26) du dispositif de travail (6) se situe à une distance (b₁, b₂) spécifiée par rapport à l'objet (O), et/ou que l'engin de construction est commandé de telle manière qu'en fonction de la proximité spatiale d'un objet (O) par rapport à la zone de travail (25, 26) du dispositif de travail, des signaux de commande sont produits pour une intervention dans la commande de machine et/ou pour le déclenchement d'une alarme.

16. Procédé selon l'une quelconque des revendications 10 à 15, **caractérisé en ce que** les données de position/d'orientation décrivant la position et l'orientation de l'unité de prise d'images (19) ou la position de la zone de travail (25, 26) du dispositif de travail (6) dans le système de référence (X, Y, Z) indépendant du déplacement de l'engin de construction sont déterminées au moyen d'un système global de navigation par satellites (GNSS).
